# EUROPEAN PATENT APPLICATION

(11) **EP 4 756 695 A1**
(43) Date of publication of application: **10.06.2026**
(21) Application number: 24849431.2
(22) Date of filing: 17.07.2024
(51) Int. Cl.: G06Q 30/02, G06Q 30/06, G06N 20/00

(54) **SERVER AND SYSTEM FOR PROVIDING ADVERTISEMENT CONTRACT MEDIATION FUNCTION, AND OPERATION METHOD THEREOF**

(30) Priority: 31.07.2023 KR 20230099583
(71) Applicant: Aligo Ai Inc., Seoul 01411 (KR); Korea University Research and Business Foundation, Seoul 02841 (KR)
(72) Inventor: LEE, Janghyuk, Seoul 02225 (KR); JANG, Seungwon, Seoul 02553 (KR); YU, Taejun, Seoul 02811 (KR)
(74) Representative: Dantz, Jan Henning
(86) International application number: PCT/KR2024/010313
(87) International publication number: WO 2025/028862

(57) **Abstract**

According to various embodiments, a server for providing an advertisement contract intermediation platform may obtain product feature information based on at least one content of a specific product obtained from a first external device, obtain a celebrity image of a specific celebrity from among at least one celebrity image obtained from a second external device, and obtain popularity information of the specific celebrity. The server may obtain an advertisement image based on the celebrity image, the product feature information, and the popularity information, wherein the advertisement image is an image in which the product feature information and the popularity information are overlapped on at least a partial region of the celebrity image. The server may obtain first result data indicating approval or disapproval of an advertisement contract in response to transmitting advertisement information including the advertisement image to the second external device, and may transmit contract information indicating execution of the advertisement contract, obtained based on the first result data, such that at least one of the first external device and the second external device outputs the contract information.

In addition, various embodiments may be implemented as will be understood from the specification.

## Description

### [Technical Field]

Various embodiments disclosed in this document relate to a server, a system, and a method of operating the same for providing an advertisement contract intermediation function.

### [Background Art]

The online display advertisement market is continuously growing. In online advertisements, a method in which a celebrity appears to attract consumers' attention is generally used. Accordingly, the market for advertisement portrait rights of celebrities is also growing.

In this situation, from the perspective of an advertiser, there is a problem related to entering into an advertisement contract for finding a celebrity suitable for a product when performing an advertisement activity for the product through an advertisement image using a celebrity image, and from the perspective of a celebrity, there is a problem that the celebrity should quickly enter the advertisement market while the celebrity's popularity continues.

### [DETAILED DESCRIPTION OF THE INVENTION]

### [Technical Problem]

In order to rapidly execute online advertisements, a platform for intermediation of advertisement contracts between an advertiser selling a product and a celebrity appearing in an advertisement is required.

Currently, in performing online advertisements, in order for an advertiser and a celebrity to enter into an advertisement contract to conduct an advertisement for a specific product, a plurality of documents related to contracts are exchanged. Accordingly, since the execution of an advertisement contract proceeds while exchanging a plurality of documents related to contracts, there is a problem in that it is difficult to rapidly execute advertisements.

In addition, when a celebrity enters into an advertisement contract with an advertiser, there is a problem in that the celebrity enters into the advertisement contract without confirming an advertisement image that is to be used for advertising a specific product using the celebrity image. Accordingly, there is a problem in that the celebrity should add conditions regarding the advertisement image and subdivide conditions of the advertisement contract.

In addition, in a process of determining a celebrity with whom an advertisement contract is to be entered into, an advertiser has a problem in that the determination should be made by considering only a celebrity image. Accordingly, since the advertiser cannot receive a recommendation of a celebrity image suitable for a specific product to be advertised or cannot check a sample of an advertisement image using a celebrity image and then make a determination, there is a problem in that time and effort are required to select a celebrity image or to determine a celebrity with whom an advertisement contract is to be entered into.

According to various embodiments, by providing a server, a system, and a method of operating the same for providing an advertisement contract intermediation function, it is possible to generate an advertisement image including a celebrity image, product information, and popularity information (celebrity signature) based on a determined celebrity image.

According to various embodiments, by providing a server, a system, and a method of operating the same for providing an advertisement contract intermediation function, it is possible for a celebrity to check the generated advertisement image and approve an advertisement contract, thereby entering into an advertisement contract between an advertiser and the celebrity.

### [Technical Solution]

According to various embodiments, a server for providing an advertisement contract intermediation platform may obtain product feature information based on at least one content of a specific product obtained from a first external device, obtain a celebrity image of a specific celebrity from among at least one celebrity image obtained from a second external device, and obtain popularity information (celebrity signature) of the specific celebrity. The server may obtain an advertisement image based on the celebrity image, the product feature information, and the popularity information, wherein the advertisement image is an image in which the product feature information and the popularity information are overlapped on at least a partial region of the celebrity image. The server may obtain first result data indicating approval or disapproval of an advertisement contract in response to transmitting advertisement information including the advertisement image to the second external device, and may transmit contract information indicating execution of the advertisement contract, obtained based on the first result data, such that at least one of the first external device and the second external device outputs the contract information.

According to various embodiments, a method of operating a server for providing an advertisement contract intermediation platform may include obtaining product feature information based on at least one content of a specific product obtained from a first external device, obtaining a celebrity image of a specific celebrity from among at least one celebrity image obtained from a second external device, obtaining popularity information of the specific celebrity, obtaining an advertisement image based on the celebrity image, the product feature information, and the popularity information, wherein the advertisement image is an image in which the product feature information and the popularity information are overlapped on at least a partial region of the celebrity image, obtaining first result data indicating approval or disapproval of an advertisement contract in response to transmitting advertisement information including the advertisement image to the second external device, and transmitting contract information indicating execution of the advertisement contract, obtained based on the first result data, such that at least one of the first external device and the second external device outputs the contract information.

According to various embodiments, a system for providing an advertisement contract intermediation platform may include a server, a first external device, and a second external device. The server may obtain product feature information based on at least one content of a specific product obtained from the first external device, obtain a celebrity image of a specific celebrity and popularity information based on at least one celebrity image obtained from the second external device, obtain an advertisement image based on the celebrity image, the product feature information, and the popularity information, and transmit advertisement information including the advertisement image to the second external device. The second external device may transmit first result data indicating approval or disapproval of an advertisement contract to the server in response to the advertisement information, and the server may obtain contract information indicating execution of the advertisement contract based on the first result data.

### [Advantageous Effects]

According to various embodiments, the server may provide a platform for intermediation between an advertiser selling a product and a celebrity appearing in an advertisement.

Accordingly, for a celebrity, effects may be provided in that advertisement revenue is significantly increased with a fixed cost, regions in which advertisements may be exposed are expanded, and advertisements for multiple product groups may be simultaneously accepted. Based on rapid settlement through simple execution, risks associated with advertisement contracts may be minimized, and by allowing the celebrity to hold final decision-making authority regarding requests for use of portrait rights of the celebrity, cases in which the celebrity is exposed to advertisements and abused may be prevented in advance.

In addition, for a celebrity, risks associated with an advertisement contract may be minimized by confirming an advertisement image using the celebrity image in advance and entering into the advertisement contract before the advertisement contract is executed.

For an advertiser, advertisements may be rapidly executed by accessing a library in which photographs and videos of celebrities are constructed, and advertisement effects may be maximized by executing advertisements during a period in which the popularity of the celebrity continues. According to a system that automatically recommends a celebrity suitable for a product to be advertised, an optimal celebrity may be utilized for advertising at an optimal cost.

In addition, an advertiser may more conveniently obtain an advertisement image by obtaining, through the server, an advertisement image using a celebrity image, product information, and popularity information of the celebrity. In addition, when determining a celebrity image to be used for advertising, the advertiser may determine a celebrity image most suitable for a product to be advertised by determining the celebrity image to be used for advertising after confirming sample advertisement images based on a plurality of celebrity images.

### [Description of Drawings]

FIG. 1 is a block diagram of devices included in a system according to various embodiments.
FIG. 2 is a block diagram of an electronic device according to various embodiments.
FIG. 3 is a diagram for explaining an example of an artificial intelligence model according to various embodiments.
FIG. 4 is a flowchart for explaining an operation in which a server obtains contract information according to various embodiments.
FIG. 5 is a flowchart for explaining an operation in which a server obtains at least one advertisement image according to various embodiments.
FIG. 6 is a diagram for explaining training of an artificial intelligence model to generate an advertisement image according to various embodiments.
FIG. 7 is a diagram for explaining a trained artificial intelligence model according to various embodiments.
FIG. 8 is a flowchart for explaining an operation in which a server intermediates an advertisement contract between a first external device and a second external device according to various embodiments.
FIG. 9 is a flowchart for explaining an operation in which a server intermediates an advertisement contract based on edit data according to various embodiments.
FIG. 10 illustrates an example of a screen for receiving product feature information according to various embodiments.
FIG. 11 illustrates an example of a screen for receiving product feature information according to various embodiments.
FIG. 12 illustrates an example of a screen for recommending a celebrity according to various embodiments.
FIG. 13 illustrates an example of a screen for determining a celebrity image using a plurality of sample advertisement images according to various embodiments.
FIG. 14 illustrates an example of an advertisement image of a celebrity according to various embodiments.
FIG. 15 illustrates an example of a screen showing a plurality of sample advertisement images for a specific celebrity according to various embodiments.
FIG. 16 illustrates an example of a screen for obtaining edit data from advertisement information according to various embodiments.
FIG. 17 illustrates an example of a screen showing an advertisement contract entered into between an advertiser and a celebrity according to various embodiments.
FIG. 18 illustrates an example showing advertisement execution results according to various embodiments.

With respect to the description of the drawings, the same or similar reference numerals may be used for the same or similar components.

### [BEST MODE FOR CARRYING OUT THE INVENTION]

Specific structural and/or functional descriptions of various embodiments are illustrated merely for the purpose of describing the various embodiments, and the various embodiments may be implemented in various forms and should not be construed as being limited to the embodiments described in the present specification or application.

Since the various embodiments may be subjected to various modifications and may have various forms, the various embodiments are illustrated in the drawings and described in detail in the present specification or application. However, matters disclosed from the drawings are not intended to specify or limit the various embodiments, and should be understood to include all modifications, equivalents, and substitutes falling within the spirit and technical scope of the various embodiments.

Terms such as first and/or second may be used to describe various components, but the components should not be limited by such terms. Such terms are used only for the purpose of distinguishing one component from another component. For example, without departing from the scope of the present disclosure, a first component may be referred to as a second component, and similarly, a second component may also be referred to as a first component.

When a component is referred to as being "connected to" or "coupled to" another component, it should be understood that the component may be directly connected to or coupled to the other component, or intervening components may be present. In contrast, when a component is referred to as being "directly connected to" or "directly coupled to" another component, it should be understood that no intervening components are present. Other expressions describing relationships between components, such as "between" and "directly between", or "adjacent to" and "directly adjacent to", should be interpreted in the same manner.

Terms used in the present specification are used only for the purpose of describing specific embodiments, and are not intended to limit the various embodiments. Singular expressions include plural expressions unless the context clearly indicates otherwise. In the present specification, terms such as "include" or "have" are intended to specify the presence of stated features, numbers, steps, operations, components, parts, or combinations thereof, and should not be understood to preclude the presence or addition of one or more other features, numbers, steps, operations, components, parts, or combinations thereof.

Unless otherwise defined, all terms used herein, including technical or scientific terms, have the same meanings as those generally understood by a person having ordinary skill in the art to which the present disclosure belongs. Terms such as those defined in generally used dictionaries should be interpreted as having meanings consistent with their meanings in the context of the related art, and should not be interpreted in an idealized or overly formal sense unless expressly defined in the present specification.

Hereinafter, the present disclosure will be described in detail by describing preferred embodiments of the present disclosure with reference to the accompanying drawings, and the same reference numerals shown in the drawings denote the same members.

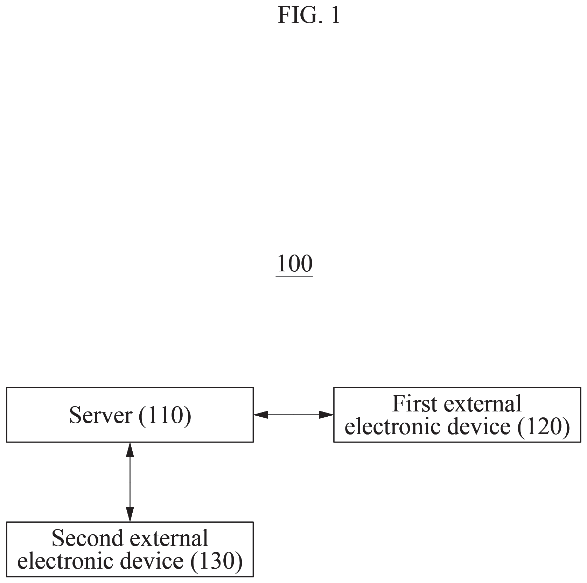

Referring to FIG. 1, FIG. 1 is a block diagram of devices included in a system (100) according to various embodiments.

According to various embodiments, the system (100) may be a system for providing an advertisement contract intermediation platform. For example, the system (100) may provide a platform that intermediates an advertisement contract between an advertiser selling a product and a celebrity appearing in an advertisement. However, a person skilled in the art may understand that there is no limitation on a field of services that may be provided by the system (100).

Referring to FIG. 1, the system (100) may include a server (110), a first external device (120), and/or a second external device (130). For example, the first external device (120) may be an electronic device of an advertiser. For example, the second external device (130) may be an electronic device of a celebrity. For example, the server (110) may be a server that intermediates between the first external device (120) and the second external device (130). Although FIG. 1 illustrates that each device is provided as a single device, this is merely an example, and there is no limitation on the number of the first external devices (120) and the second external devices (130) that are intermediated through the server (110). For example, the first external device (120) may exist in a number corresponding to a plurality of advertisers, and the second external device (130) may exist in a number corresponding to a plurality of celebrities.

According to various embodiments, the components illustrated in FIG. 1 (e.g., the server (110) and/or the first and second external devices (120, 130)) may be connected through wired communication and/or wireless communication, and may transmit and receive various types of information and/or data described in the present disclosure with each other through the communication.

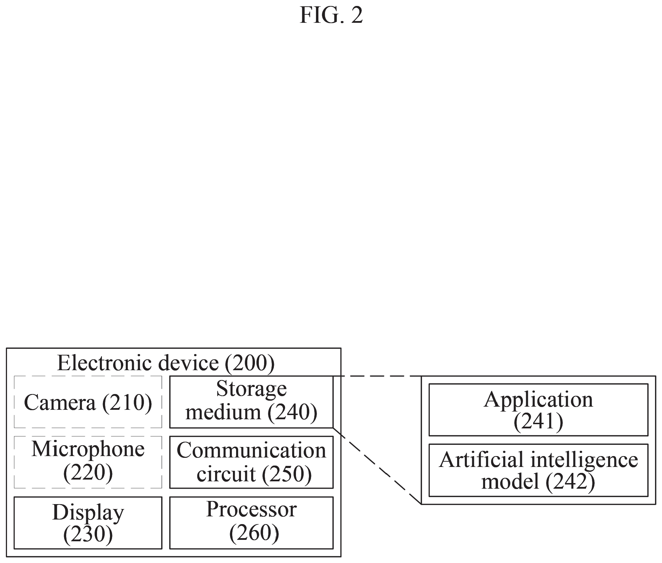

According to various embodiments, the server (110) may obtain at least one content of a specific product from the first external device (120). For example, the server (110) may obtain at least one content of the specific product through a communication circuit (e.g., the communication circuit (250) of FIG. 2). According to various embodiments, the specific product may refer to a product that an advertiser, who is a user of the first external device (120), intends to advertise. In addition, the at least one content of the specific product may include at least one of an image of the specific product, a name of the specific product, and information on the specific product.

According to various embodiments, the server (110) may obtain product feature information based on the obtained at least one content of the specific product. For example, based on the at least one content, the server (110) may obtain product feature information including at least one of an image converted into an image suitable for being used in an advertisement image, attribute information of the specific product (e.g., innovative, unique, economical, trendy, exclusive), and a name of the specific product.

According to various embodiments, the server (110) may obtain a celebrity image of a specific celebrity and popularity information based on at least one celebrity image obtained from the second external device (130). For example, the server (110) may obtain at least one celebrity image from the second external device (130) through a communication circuit (e.g., the communication circuit (250) of FIG. 2). The server (110) may determine a celebrity image to be used in an advertisement image from among the at least one celebrity image. In addition, the server (110) may obtain popularity information of the specific celebrity corresponding to the celebrity image to be used in the advertisement image based on the at least one celebrity image.

According to various embodiments, the server (110) may obtain an advertisement image based on the celebrity image, the product feature information, and the popularity information. For example, the server (110) may generate an advertisement image in which a visual object representing the product feature information and a visual object representing the popularity information are overlapped on at least a partial region of the celebrity image.

According to various embodiments, the server (110) may generate advertisement information including the advertisement image and transmit the generated advertisement information to the second external device (130). For example, the server (110) may generate advertisement information including at least one of the advertisement image, a specific product to be advertised, and condition information related to an advertisement contract (e.g., a contract period, a contract cost, a number of advertisement executions, an advertisement execution platform, etc.), and transmit the advertisement information to the second external device (130). According to various embodiments, the second external device (130) may generate first result data indicating approval or disapproval of an advertisement contract in response to the received advertisement image. For example, the second external device (130) may output the advertisement information through a display and obtain an input of a celebrity indicating approval or disapproval of the advertisement contract in response to the advertisement information. The second external device (130) may generate the first result data indicating approval or disapproval of the advertisement contract and transmit the first result data to the server (110). According to various embodiments, a celebrity who is a user of the second external device (130) may check the advertisement image and approve the advertisement contract, thereby minimizing risks (e.g., image damage, etc.) caused by the advertisement contract.

According to various embodiments, the server (110) may obtain contract information indicating execution of an advertisement contract for the specific product based on the first result data obtained from the second external device (130). For example, when the first result data indicating approval of the advertisement contract is obtained from the second external device (130), the server (110) may execute an advertisement contract between an advertiser and a celebrity for the specific product to be advertised and generate contract information indicating execution of the advertisement contract. According to various embodiments, the contract information may include various types of information related to the advertisement contract, such as information indicating execution of the advertisement contract, condition information of the advertisement contract, information on the product to be advertised, information on a celebrity to be advertised, and advertisement information.

According to various embodiments, the server (110) may transmit the contract information to the first external device (120) and/or the second external device (130). According to various embodiments, the first external device (120) and/or the second external device (130) may output a screen including the contract information, respectively.

According to various embodiments, the server (110), the first external device (120), and the second external device (130) are not limited to the illustrated examples and may each be configured as a single device performing respective functions. For example, the first external device (120) may perform the functions of the server (110). Alternatively, the second external device (130) may perform the functions of the server (110).

FIG. 2 is a block diagram of an electronic device (200) according to various embodiments.

According to various embodiments, other components included in the system (100) (e.g., the server (110), the first external device (120), and/or the second external device (130)) may be implemented to perform at least some of operations of the electronic device (200) described in the present disclosure by including components that are the same as or similar to those illustrated in FIG. 2.

Hereinafter, for convenience of description, the electronic device (200) is described as corresponding to the server (110) of FIG. 1 and performing operations similar to those of the server (110). However, the electronic device (200) is not limited thereto, and may be the first external device (120) and/or the second external device (130).

Referring to FIG. 2, the electronic device (200) may include a camera (210), a microphone (220), a display (230), a storage medium (240), a communication circuit (250), and/or a processor (160). The listed components may be operatively or electrically connected to each other. The components of the electronic device (200) illustrated in FIG. 2 are provided as an example, and some components may be modified, omitted, or added.

Hereinafter, each component included in the electronic device (200) will be described.

According to various embodiments, the electronic device (200) may include components for obtaining various types of data. For example, in addition to the camera (210), the microphone (220), and the communication circuit (250), the electronic device (200) may further include various types of devices (e.g., various sensors, a touch screen) for obtaining various types of contents described below. The camera (210), the microphone (220), and the communication circuit (250) may hereinafter be referred to as data acquisition devices.

According to various embodiments, the data acquisition devices may obtain various types of data (or contents) to be processed based on an artificial intelligence model (242) to be described later.

According to various embodiments, if the electronic device (200) is the first external device (120) or the second external device (130), various types of data may be obtained through data acquisition devices. In one embodiment, the data acquisition devices may be operated to obtain various types of data according to execution and/or operation of processes, programs, and/or applications installed (or stored) in the electronic device (200). As an example, if a camera application is executed and/or operated, the electronic device (200) may operate the camera (210) (e.g., perform an operation of controlling read-out of an image sensor) to obtain images and/or videos as data. As another example, if a recording application is executed and/or operated, the electronic device (200) may operate the microphone (220) to obtain audio data such as a user's utterance and/or surrounding sounds as data. As another example, if a web-based application is executed and/or operated, the electronic device (200) may establish a communication connection with a media server using the communication circuit (250) and obtain media data such as image data, video data, and audio data. Hereinafter, examples of respective data acquisition devices will be described.

According to various embodiments, the camera (210) (e.g., at least one front camera and at least one rear camera) may capture still images (or images) and videos. According to one embodiment, the at least one camera (210) may include one or more lenses, image sensors, image signal processors, or flashes. In one embodiment, the electronic device (200) may include cameras (211) each having different attributes or functions (or purposes). For example, the at least one camera (211) may include cameras having different angles of view. The angles of view may include, as examples, a super wide angle of 114° to 94°, a wide angle, a normal lens of 84° to 63°, a telephoto of 28° to 8°, and a super telephoto of 6° to 3°. For example, as described above, the at least one camera (211) may include at least one front camera disposed on a front side to capture images and/or videos and at least one rear camera disposed on a rear side to capture images and/or videos. According to various embodiments, the second external device (130) may obtain at least one image having a celebrity as a subject through the camera (210).

According to various embodiments, the microphone (220) may receive sound from outside the electronic device (200). For example, the electronic device (200) may operate the microphone (220) to receive sounds generated from the outside through the microphone (220). The sounds generated from the outside may include voices (or utterances) of speakers (e.g., a user and/or other speakers (or others)), daily noise, and surrounding (or background) noise. In one embodiment, the microphone (220) may include a plurality of microphones. The electronic device (200) may form beamforming for receiving sound generated from a designated direction with respect to the electronic device (200) from sounds received using the plurality of microphones (220). Based on the received sounds, sound of the designated direction that is obtained may be defined as sub-sound. Each of the plurality of microphones (220) may be disposed in the electronic device (200) to be spaced apart by a predetermined distance, and the sub-sound may be obtained by signal-processing sounds received through the microphones (220) by a time or phase corresponding to the spaced distance and a direction in which sound is to be obtained. Since the beamforming technique is a well-known technique, a detailed description thereof will be omitted. According to various embodiments, the electronic device (200) (e.g., the first external device (120) and/or the second external device (130)) may obtain a user input through the microphone (220). For example, the electronic device (200) may obtain an input indicating approval or disapproval of execution of an advertisement contract through the microphone (220).

According to various embodiments, the communication circuit (250) may establish a communication connection with an external electronic device (e.g., the server (110), the first external device (120), and the second external device (130)) using various types of communication schemes, and transmit and/or receive data. The communication schemes may include, as described above, a communication scheme for establishing a direct communication connection such as Bluetooth and Wi-Fi Direct, a communication scheme using an access point (AP) (e.g., Wi-Fi communication), or a communication scheme using cellular communication via a base station (e.g., 3G, 4G/LTE, and 5G).

According to various embodiments, the electronic device (200) may include a processor (260). According to various embodiments, the processor (260) may execute software (e.g., a program) to control at least one other component (e.g., a hardware or software component) of the electronic device (200) connected to the processor (260), and may perform various data processing or computations.

According to various embodiments, the processor (260) may execute operations or data processing related to control and/or communication of at least one other component of the electronic device (200) by using instructions stored in the storage medium (240). According to one embodiment, the processor (260) may include at least one of a central processing unit (CPU), a graphics processing unit (GPU), a micro controller unit (MCU), a sensor hub, a supplementary processor, a communication processor, an application processor, an application specific integrated circuit (ASIC), a field programmable gate array (FPGA), or a neural processing unit (NPU), and may have a plurality of cores.

According to various embodiments, if the electronic device (200) includes a main processor and a supplementary processor, the supplementary processor may be configured to use lower power than the main processor or to be specialized for a designated function. The supplementary processor may be implemented separately from the main processor or as a part thereof.

The supplementary processor may, for example, control at least some of functions or states related to at least one component (e.g., the communication circuit (250)) of the electronic device (200) in place of the main processor if the main processor is in an inactive state (e.g., a sleep state), or together with the main processor if the main processor is in an active state (e.g., executing an application). According to various embodiments, the supplementary processor (e.g., a communication processor) may be implemented as a part of another functionally related component (e.g., the communication circuit (250)).

According to various embodiments, the supplementary processor (e.g., a neural processing unit) may include a hardware structure specialized for processing an artificial intelligence model. The artificial intelligence model may be generated through machine learning. A learning algorithm may include, for example, supervised learning, unsupervised learning, semi-supervised learning, or reinforcement learning, but is not limited to the above examples. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited to the above examples. The artificial intelligence model may include, in addition to or alternatively to the hardware structure, a software structure.

According to various embodiments, the electronic device (200) may include a storage medium (240). According to various embodiments, the storage medium (240) may store various data used by at least one component (e.g., the processor (260)) of the electronic device (200). The data may include, for example, software (e.g., a program) and input data or output data related to instructions thereof.

According to various embodiments, the storage medium (240) may be broadly interpreted to include any electronic component capable of storing electronic information. For example, the storage medium (240) may include a solid state drive (SSD), a hard disk drive (HDD), a CD-ROM, or the like. In addition, for example, the storage medium (240) may include a non-volatile memory device, such as an erasable programmable read-only memory (EPROM) device, an electrically erasable programmable read-only memory (EEPROM) device, a flash memory device, a phase change random access memory (PRAM) device, a resistance random access memory (RRAM) device, a nano floating gate memory (NFGM) device, a polymer random access memory (PoRAM) device, a magnetic random access memory (MRAM) device, or a ferroelectric random access memory (FRAM) device, and/or a volatile memory device, such as a dynamic random access memory (DRAM) device, a static random access memory (SRAM) device, or a mobile DRAM device.

According to various embodiments, the storage medium (240) may store various types of information obtained through the processor (260). For example, the storage medium (240) may store various data, such as at least one celebrity image obtained through the processor (260), at least one content of a specific product, and at least one advertisement image. In addition, the storage medium (240) may store identification information of an external device (e.g., the server (110), the first external device (120), and/or the second external device (130)) connected to the electronic device (200). The electronic device (200) may establish a communication connection with the external device using the identification information.

According to various embodiments, the storage medium (240) may store an application (241) for providing an advertisement contract intermediation platform. The advertisement contract intermediation platform may provide a function of intermediating an advertisement contract for a specific product between an advertiser and a celebrity. The electronic device (200) may execute the application (241) to provide the advertisement contract intermediation function. Accordingly, an advertisement contract for a specific product may be executed between an advertiser (e.g., a user of the first external device (120)) and a celebrity (e.g., a user of the second external device (130)).

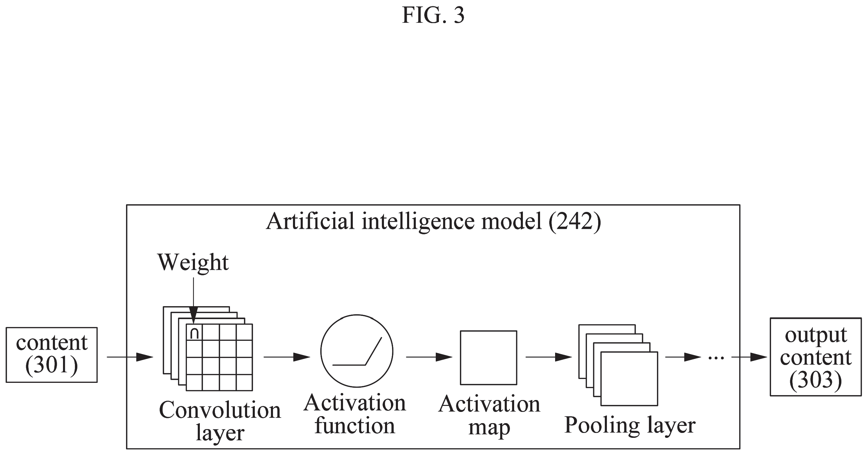

According to various embodiments, the storage medium (240) may store an artificial intelligence model (242) trained to provide various types of data. According to various embodiments, the electronic device (200) may perform various operations described in the present disclosure by using the artificial intelligence model (242). A detailed description of the artificial intelligence model (242) will be described later with reference to FIG. 3.

According to various embodiments, the electronic device (200) (e.g., the first external device (120) or the second external device (130)) may include a display (230). The display (230) may visually provide information to the outside of the electronic device (200) (e.g., a user). According to various embodiments, the display (230) may display various types of content (e.g., text, images, videos, icons, and/or symbols). According to various embodiments, the display (230) may include a liquid crystal display (LCD), a light emitting diode (LED) display, or an organic light emitting diode (OLED) display.

According to various embodiments, the display (230) of the electronic device (200) may display various types of information obtained from the processor (260). For example, the display (230) may display various types of information according to execution of the application (241), such as contract information indicating execution of an advertisement contract, advertisement information, an advertisement image, at least one celebrity image, celebrity recommendation information, and at least one content of a specific product.

According to various embodiments, the electronic device (200) may include a hologram device for operation of the display (230), or a projector and a control circuit for controlling the projector. According to one embodiment, the display (230) may include a touch sensor configured to detect a touch, or a pressure sensor configured to measure intensity of force generated by the touch.

According to various embodiments, the electronic device (200) may obtain a user input from a user (e.g., an advertiser or a celebrity) through the touch sensor of the display (230). For example, the electronic device (200) may obtain various inputs, such as an input requesting modification of advertisement information, an input for selecting an advertisement image from among a plurality of sample advertisement images, and an input for selecting a celebrity, through the display (230). According to various embodiments, the processor (260) of the electronic device (200) may obtain at least one content of a specific product to be advertised by executing an advertisement contract from an external device. The processor (260) may obtain product feature information based on the at least one content of the specific product.

According to various embodiments, the processor (260) may obtain at least one celebrity image. The processor (260) may obtain a celebrity image of a specific celebrity from among at least one celebrity image stored in the storage medium (240). According to various embodiments, the processor (260) may obtain popularity information of the specific celebrity. The popularity information may include various types of information related to popularity of the specific celebrity, such as a name of a broadcasting program of the specific celebrity, a team to which the specific celebrity belongs, a nickname of the specific celebrity, a hit song, an award history, a competition history, and a catchphrase.

According to various embodiments, the processor (260) may obtain an advertisement image based on the celebrity image, the product feature information, and the popularity information. For example, the processor (260) may execute the artificial intelligence model (242) through the application (241) to obtain the advertisement image. According to various embodiments, the advertisement image may include the celebrity image, the product feature information, and the popularity information. For example, the advertisement image may include an image in which the product feature information and the popularity information are overlapped on at least a partial region of the celebrity image.

According to various embodiments, the processor (260) may generate advertisement information including the advertisement image. For example, the advertisement information may include various types of information related to an advertisement contract, such as condition information of the advertisement contract, information on a product to be advertised, information on a celebrity to be advertised, and the advertisement image.

According to various embodiments, the processor (260) may obtain result data indicating approval or disapproval of an advertisement contract by transmitting the advertisement information to an external device connected to the electronic device (200). For example, the electronic device (200) (e.g., the server (110) or the first external device (120)) may obtain the result data in response to transmitting the advertisement information to the second external device (130) of a celebrity.

According to various embodiments, the processor (260) may obtain contract information indicating execution of the advertisement contract based on the result data. For example, the processor (260) may execute the advertisement contract and obtain contract information indicating execution of the advertisement contract.

According to various embodiments, the processor (260) may transmit the contract information such that an external device related to execution of the advertisement contract outputs the contract information. Alternatively, the processor (260) may control the display (230) of the electronic device (200) (e.g., the first external device (120) and/or the second external device (130)) to output the contract information.

Hereinafter, a plurality of artificial intelligence models (242) according to various embodiments will be described.

FIG. 3 is a diagram for explaining an example of an artificial intelligence model (242) according to various embodiments.

According to various embodiments, the artificial intelligence model (242) may be stored in the electronic device (200) (e.g., the server (110), the first external device (120), and/or the second external device (130)). According to various embodiments, the server (110) may generate (or update) the artificial intelligence model (242) and perform various operations described in the present disclosure by using the generated artificial intelligence model (242). According to one embodiment, the server (110) may provide the generated artificial intelligence model (242) to an external device (e.g., the first external device (120) and/or the second external device (130)), and the external device may perform various operations described in the present disclosure by using the provided (or downloaded) artificial intelligence model (242). According to one embodiment, the external device may generate (or update) the artificial intelligence model (242) and perform various operations described in the present disclosure by using the generated artificial intelligence model (242).

According to various embodiments, the artificial intelligence model (242) may be a pre-trained model based on a designated type of learning algorithm, and may be an artificial intelligence model pre-implemented to receive various types of data (or content) as input data, perform computations, and output (or obtain) result data. For example, in the electronic device (e.g., the server (110), the first external device (120), and/or the second external device (130)), training may be performed such that designated types of data are used as input data and a specific type of result data is output as output data based on a machine learning algorithm or a deep learning algorithm, thereby generating a plurality of artificial intelligence models (242) (e.g., a machine learning model and a deep learning model). The machine learning algorithm may include supervised learning algorithms, such as linear regression and logistic regression, unsupervised learning algorithms, such as clustering, visualization and dimensionality reduction, and association rule learning, and reinforcement learning algorithms. The deep learning algorithm may include an artificial neural network (ANN), a deep neural network (DNN), and a convolutional neural network (CNN), but is not limited to the above examples, and may further include various learning algorithms. The trained artificial intelligence model (242) may include at least one matrix (e.g., a convolution layer and a pooling layer) for computing input data, and may be implemented to output result data by performing computations on the input data based on the matrices. As an example, as illustrated in FIG. 3, an artificial intelligence model (242) (e.g., a CNN model) may be generated by using image data and information on objects included in the image data as training data (e.g., setting image data as input data and information on objects (or subjects) as output data). The generated artificial intelligence model (242) may be implemented to output output content (303) (e.g., result data, an advertisement image, celebrity recommendation information) including information on objects (e.g., instance-segmented image data) by computing the input image data using a convolution layer, an activation function (e.g., a sigmoid function or a ReLU function), and a pooling layer in response to receiving content (301) (e.g., image data (a celebrity image, an image of a specific product), text data (popularity information, product feature information)) as input. Although not illustrated in FIG. 3, a deep learning model trained based on the CNN may include more layers in addition to the illustrated convolution layer and pooling layer, and since this is a well-known technique, a detailed description thereof will be omitted. As another example, without being limited to the example illustrated in FIG. 3, another artificial intelligence model (e.g., a machine learning model or a deep learning model) may be generated by using audio data and information on speakers as training data (e.g., setting audio data as input data and information on speakers as output data), and the other artificial intelligence model may be implemented to output an identifier (e.g., a unique ID) for identifying a speaker as result data in response to receiving audio data (e.g., an utterance) as input.

According to various embodiments, the artificial intelligence model (242) may be implemented to include weights of matrices corresponding to values related to designated computational capability (hereinafter, computation values) (e.g., a weight computation value (e.g., weight precision) of 32 bits and an activation function computation value (e.g., activation function precision) of 32 bits), and activation functions. For example, the computation values may be values related to capability for computing parameters, such as weights or activation functions (e.g., a sigmoid function or a ReLU function), and may include a computation value for weights (e.g., weight precision) and a computation value for activation functions (e.g., activation precision).

Meanwhile, if the server (110) generates (or stores) the artificial intelligence model (242), the server (110) may receive various types of content from the first external device (120) and/or the second external device (130) and provide results processed by using the artificial intelligence model (242) to the first external device (120) and/or the second external device (130). If the first external device (120) and/or the second external device (130) generates (or stores) the artificial intelligence model (242), the first external device (120) and/or the second external device (130) may process the obtained various types of content by using the artificial intelligence model (242) and output the results.

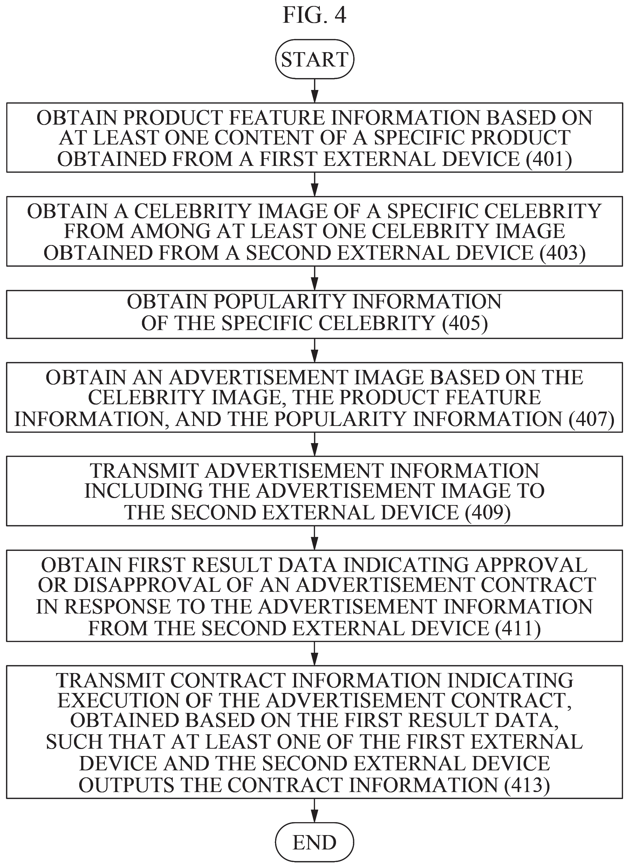

FIG. 4 is a flowchart for explaining an operation in which a server obtains contract information according to various embodiments.

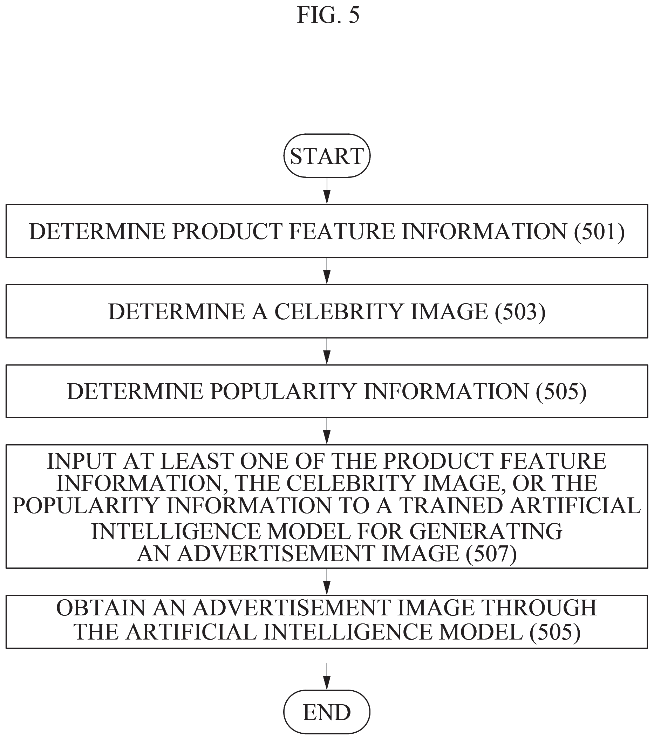

Operations of FIG. 4 and operations of FIG. 5 may be organically performed, and at least some of the operations of FIG. 4 and the operations of FIG. 5 may be omitted.

Hereinafter, it will be described that operations 401 to 411 are performed by the server (110). However, if the first external device (120) and/or the second external device (130) includes the artificial intelligence model (242), at least some of operations 401 to 411 may be performed by the first external device (120) and/or the second external device (130). In this case, operations of transmitting and receiving data between the first external device (120) and/or the second external device (130) and the server (110) may be omitted.

Referring to FIG. 4, the server (110) (e.g., the electronic device (200) of FIG. 2) may, in operation 401, obtain product feature information based on at least one content of a specific product obtained from the first external device (120).

According to various embodiments, the server (110) may obtain at least one content of a specific product from the first external device (120). For example, the specific product may include a product that a user (e.g., an advertiser) of the first external device (120) intends to advertise. For example, the at least one content of the specific product may include an image of the specific product.

According to various embodiments, the server (110) may obtain product feature information from the at least one content of the specific product. For example, the server (110) may obtain the product feature information through the artificial intelligence model (242).

According to various embodiments, the server (110) may, in operation 403, obtain a celebrity image of a specific celebrity from among at least one celebrity image obtained from the second external device (130).

According to various embodiments, the server (110) may obtain a celebrity image selected through the first external device (120) from among the at least one celebrity image. For example, the server (110) may obtain a celebrity image selected by the first external device (120) as an image to be used for an advertisement image for a specific product from among the at least one celebrity image.

According to various embodiments, the server (110) may, in operation 405, obtain popularity information of the specific celebrity. For example, the server (110) may obtain the popularity information of the specific celebrity from the first external device (120). For example, the server (110) may obtain various types of popularity information related to a degree to which the specific celebrity is recognized, such as SNS information of the specific celebrity, portal site search information, broadcast appearance information of the specific celebrity, and mass media information related to the specific celebrity.

According to various embodiments, the server (110) may store the product feature information, the celebrity image, and the popularity information in a storage device. For example, the server (110) may obtain and store the product feature information, the celebrity image, and the popularity information in the storage device from the first external device and/or the second external device during execution of a service related to the advertisement intermediation platform or at any time, and may use the product feature information, the celebrity image, and the popularity information stored in the storage device when executing an operation for advertisement intermediation.

According to various embodiments, the server (110) may, in operation 407, obtain an advertisement image based on a celebrity image, product feature information, and popularity information. For example, the server (110) may obtain an advertisement image in which the product feature information and the popularity information are overlaid on at least a partial region of the celebrity image. According to various embodiments, the server (110) may input the celebrity image, the product feature information, and the popularity information into the artificial intelligence model (242) described with reference to FIG. 2, and obtain an advertisement image in which the product feature information and the popularity information are overlaid on at least a partial region of the celebrity image.

According to various embodiments, the server (110) may, in operation 409, transmit advertisement information including the advertisement image to the second external device (130). For example, the server (110) may transmit the advertisement information through a communication circuit (e.g., the communication circuit (250)) such that a user (e.g., a celebrity) of the second external device (130) can check a completed advertisement image and conclude an advertisement contract. According to various embodiments, the advertisement information may include various types of information related to the advertisement contract, such as condition information of the advertisement contract (e.g., advertisement period, advertisement cost, advertisement region, advertisement range, advertisement timing, etc.), information on a product to be advertised, information on a target celebrity of the advertisement, and the advertisement image. For example, the advertisement information may include various types of information related to an advertisement contract for the specific product to be advertised.

According to various embodiments, the server (110) may, in operation 411, obtain first result data indicating whether an advertisement contract is approved, in response to advertisement information obtained from the second external device (130). For example, the second external device (130) may output the advertisement information through a display. The second external device (130) may obtain a user input indicating whether an advertisement contract for the specific product is concluded, from a user (e.g., a celebrity), in response to the displayed advertisement information.

According to various embodiments, the server (110) may, in operation 413, transmit contract information indicating conclusion of the advertisement contract obtained based on the first result data, such that at least one of the first external device (120) and the second external device (130) outputs the contract information. For example, the server (110) may determine whether the user (e.g., a celebrity) of the second external device (130) approves the advertisement contract based on the first result data.

According to various embodiments, if the first result data obtained from the second external device (130) includes information indicating approval of the advertisement contract, the server (110) may obtain contract information related to the advertisement contract. For example, the server (110) may manage that an advertisement contract for the specific product is concluded between a user (e.g., an advertiser) of the first external device (120) and a user (e.g., a celebrity) of the second external device (130). The server (110) may generate contract information related to the advertisement contract in response to the conclusion of the advertisement contract.

According to various embodiments, the server (110) may transmit the contract information through a communication circuit (e.g., the communication circuit (250)) such that the first external device (120) and/or the second external device (130) outputs the contract information. According to various embodiments, the first external device (120) and/or the second external device (130) may display, through a display, a screen including the contract information as a notification indicating that the advertisement contract has been concluded.

FIG. 5 is a flowchart for explaining an operation in which a server obtains at least one advertisement image according to various embodiments.

Hereinafter, it will be described that operations 501 to 509 are performed by the server (110). However, if the first external device (120) and/or the second external device (130) includes the artificial intelligence model (242), at least some of operations 501 to 509 may be performed by the first external device (120) and/or the second external device (130). In this case, operations of transmitting and receiving data between the first external device (120) and/or the second external device (130) and the server (110) may be omitted.

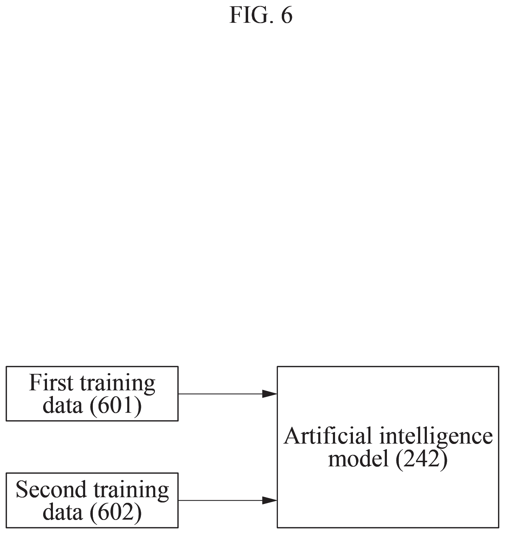

Referring to FIG. 5, the server (110) may, in operation 501, determine product feature information. For example, the server (110) may determine product feature information to be used to generate an advertisement image. For example, the server (110) may determine the product feature information by using an artificial intelligence model (242) (e.g., a third artificial intelligence model) to be described later with reference to FIG. 6.

According to various embodiments, the server (110) may, in operation 503, determine a celebrity image.

According to various embodiments, the server (110) may generate celebrity recommendation information for a suitable celebrity image among at least one celebrity image based on product feature information of the specific product, and obtain a celebrity image selected from the first external device (120) in response to the celebrity image recommendation information.

According to various embodiments, the server (110) may generate a plurality of first sample advertisement images based on at least one celebrity image, product feature information, and popularity information corresponding to each of the at least one celebrity image, and obtain a celebrity image selected from the first external device (120) based on the plurality of first sample advertisement images. In one example, the server (110) may transmit the plurality of first sample advertisement images to the first external device (120) so as to select one of the plurality of first sample advertisement images. In one example, the first external device (120) may output the plurality of first sample advertisement images and obtain a user input (e.g., an advertiser) for selecting a celebrity image to be used for advertisement execution among the plurality of first sample advertisement images. The first external device (120) may transmit information on the user input to the server (110). According to various embodiments, the server (110) may determine the celebrity image to be used for generating an advertisement image based on a response (e.g., a user response of the first external device (120)) to the plurality of first sample advertisement images from the first external device (120).

According to various embodiments, the server (110) may store the product feature information, the celebrity image, and the popularity information in a storage device. For example, the server (110) may obtain the product feature information, the celebrity image, and the popularity information from the first external device and/or the second external device during execution of a service related to an advertisement mediation platform or at any time, store the obtained information in the storage device, and use the product feature information, the celebrity image, and the popularity information stored in the storage device in an operation for obtaining an advertisement image.

According to various embodiments, the server (110) may, in operation 505, determine popularity information. For example, the server (110) may obtain popularity information of the specific celebrity from the first external device (120) and/or the second external device (130). For example, the server (110) may obtain various types of popularity information related to a degree to which the specific celebrity is recognized, such as SNS information of the specific celebrity, portal site search information, broadcast appearance information of the specific celebrity, and mass media information related to the specific celebrity. The server (110) may determine popularity information to be used for generating an advertisement image among the various types of popularity information.

According to various embodiments, the server (110) may, in operation 507, input at least one of product feature information, a celebrity image, and popularity information into an artificial intelligence model trained to generate an advertisement image (e.g., the artificial intelligence model (242) described with reference to FIG. 6). Accordingly, the server (110) may, in operation 509, obtain an advertisement image through the artificial intelligence model (242).

According to various embodiments, the server (110) may input the product feature information, the celebrity image, and popularity information of the celebrity into the artificial intelligence model (242) trained to generate an advertisement image. The artificial intelligence model (242) may output an advertisement image in response to input of the product feature information, the celebrity image, and the popularity information of the celebrity. The advertisement image may be the advertisement image described with reference to FIGS. 2 and 4.

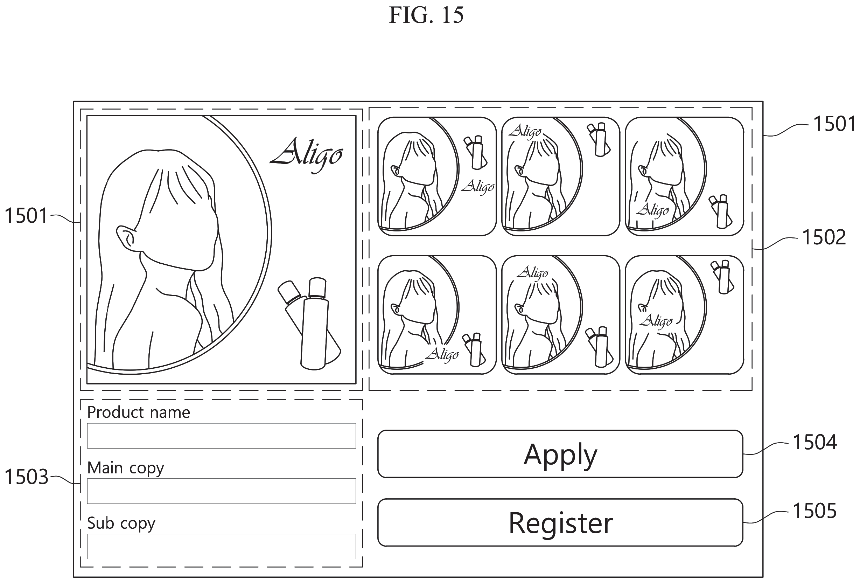

According to various embodiments, the artificial intelligence model (242) may output a plurality of second sample advertisement images in response to input of the product feature information, the celebrity image, and the popularity information of the celebrity. The server (110) may select the advertisement image from among the plurality of second sample advertisement images. According to various embodiments, the plurality of second sample advertisement images may include images in which product information and popularity information are overlaid at different positions on at least a partial region of the celebrity image. A description of the plurality of second sample advertisement images will be described later with reference to FIG. 15.

According to various embodiments, the server (110) may transmit the plurality of second sample advertisement images to the first external device (120) so as to select one of the plurality of second sample advertisement images. In one example, the first external device (120) may output the plurality of second sample advertisement images and obtain a user input (e.g., an advertiser) for selecting an advertisement image to be used for advertisement execution among the plurality of second sample advertisement images. The first external device (120) may transmit information on the user input to the server (110).

According to various embodiments, the server (110) may obtain the advertisement image to be used for advertisement execution based on a response (e.g., a user response of the first external device (120)) to the plurality of second sample advertisement images from the first external device (120).

FIG. 6 is a diagram for explaining training an artificial intelligence model to generate an advertisement image according to various embodiments.

Referring to FIG. 6, the artificial intelligence model (242) may be trained to generate an advertisement image by first training data (601) and second training data (602). The first training data (601) may be input data, and the second training data (602) may be data output through the artificial intelligence model (242). For example, the artificial intelligence model (242) trained by the first training data (601) and the second training data (602) may receive input data of the same type as the first training data (601) and output output data of the same type as the second training data (602).

According to various embodiments, if the first training data (601) includes a celebrity image, product feature information, and popularity information of a celebrity, and the second training data (602) includes an advertisement image generated based on the celebrity image, the product feature information, and the popularity information of the celebrity, a first artificial intelligence model that outputs an advertisement image may be generated.

According to various embodiments, the first training data (601) is not limited to the above-described examples and may include a product image of the specific product and/or celebrity features of the celebrity. In addition, the second training data (602) is not limited to the above-described examples and may further include an advertisement image generated based on the product image of the specific product and/or the celebrity features of the celebrity.

According to various embodiments, the first training data (601) and/or the second training data (602) are not limited to the above-described examples and may include various types of information for the first artificial intelligence model that outputs an advertisement image.

According to various embodiments, the artificial intelligence model (242) may be a second artificial intelligence model that generates celebrity recommendation information based on product feature information of a specific product. For example, the second artificial intelligence model may be trained based on celebrity features and interaction information between the specific product and the celebrity. For example, if the first training data (601) includes product attribute information generated based on a plurality of weight values related to a plurality of product features of the specific product, and the second training data (602) includes celebrity recommendation information, a second artificial intelligence model that outputs celebrity recommendation information may be generated.

According to various embodiments, the artificial intelligence model (242) may be implemented as a plurality of models. For example, if the first training data (601) includes product information, and the second training data (602) includes product features and/or product feature values respectively corresponding to the product features, a third artificial intelligence model may be generated according to training data related to the product. If the first training data (601) includes celebrity information to be described later, and the second training data (602) includes celebrity features to be described later and/or celebrity feature values respectively corresponding to the celebrity features, a fourth artificial intelligence model may be generated according to training data related to the celebrity.

According to various embodiments, the second artificial intelligence model may determine a celebrity image to be used for an advertisement image by using at least one of the first training data and the second training data, product feature information obtained from the third artificial intelligence model, and celebrity features obtained from the fourth artificial intelligence model.

According to various embodiments, the first artificial intelligence model that outputs an advertisement image may determine a celebrity image by using celebrity recommendation information obtained through at least one of the second to fourth artificial intelligence models, and output an advertisement image based on the celebrity image.

In addition, according to various embodiments, the first artificial intelligence model may obtain a celebrity image determined based on celebrity image recommendation information through at least one of the second to fourth artificial intelligence models, and output an advertisement image based on the celebrity image.

Hereinafter, for convenience of description, an artificial intelligence model related to advertisement images (e.g., a first artificial intelligence model) and artificial intelligence models related to celebrity recommendation (e.g., a second artificial intelligence model, a third artificial intelligence model, and/or a fourth artificial intelligence model) are described as an artificial intelligence model having the same reference numeral (242). However, as described above, it may be understood by those skilled in the art that the artificial intelligence model related to advertisement images and the artificial intelligence model related to celebrity recommendation may be implemented and used separately.

According to various embodiments, the artificial intelligence model (242) (e.g., the first artificial intelligence model) may use product feature information of a specific product to be advertised, a celebrity image of a specific celebrity with whom an advertisement contract is to be concluded, and popularity information of the specific celebrity as first training data (601), and may use, as second training data (602), an advertisement image in which the product feature information and the popularity information are overlapped and displayed in at least a partial area of the celebrity image.

For example, the product feature information may include a product image, a product name, a product category, a product description, manufacturer information, or a URL of the manufacturer, but the information of the product is not limited thereto. The product information may be provided by an advertiser (e.g., a user of the first external device (120)), or may be collected from an external server (e.g., an external cloud server including information on various products).

According to various embodiments, the product feature information may include product attribute information generated based on a plurality of product features and a plurality of feature values corresponding to the plurality of product features. A "product feature" may be a designated feature related to a product. For example, the plurality of product features may include "sincerity (honest, cheerful, wholesome, friendly, sincere, original, real)", "excitement (darling, cool, imaginative, unique, trendy, young, contemporary)", "competence (successful, reliable, intelligent, secure, technical, leader)", "sophistication (charming, feminine, upper class, glamorous, smooth)", and "ruggedness (tough, masculine, outdoorsy, rugged)". According to various embodiments, the plurality of product features may be preset or changed, and the number of the plurality of product features is not limited. For example, if there is a post in which information of a specific product is posted in a social network service (SNS), additional information related to the information of the specific product (e.g., frequently mentioned information such as hashtags) may be used such that additional information having high frequency among a plurality of products (e.g., hashtags) is determined as candidates for the product features. According to various embodiments, the plurality of feature values corresponding to the plurality of product features may include numerical values respectively corresponding to the plurality of product features.

According to various embodiments, the artificial intelligence model (242) may be trained as a model specialized to generate a specific advertisement image according to the first training data (601) and the second training data (602).

According to various embodiments, the server (110) may store advertiser history information related to advertisement image generation associated with an advertiser (e.g., the first external device (120)) in the storage medium (240). The server (110) may train the artificial intelligence model (242) to generate an advertisement image based on the advertiser history information. For example, the server (110) may train the artificial intelligence model (242) based on first training data (601) including product feature information of products previously advertised by the advertiser, celebrity images used in advertisement images of the products, and popularity information, and second training data (602) including advertisement images of the products previously advertised. As a result, an artificial intelligence model (242) capable of generating an image reflecting tendencies related to advertisement image generation of the advertiser may be generated.

According to various embodiments, the server (110) may store product advertisement history information related to advertisement image generation for a specific product in the storage medium (240). The server (110) may train the artificial intelligence model (242) to generate an advertisement image based on the product advertisement history information. For example, the server (110) may train the artificial intelligence model (242) based on first training data (601) including product feature information of a product to be advertised by an advertiser, and second training data (602) including advertisement images related to the product. As a result, an artificial intelligence model (242) capable of generating an image reflecting characteristics of the product to be advertised by the advertiser may be generated.

According to various embodiments, the server (110) may store celebrity history information related to advertisement image generation of a specific celebrity in the storage medium (240). The server (110) may train the artificial intelligence model (242) to generate an advertisement image based on the celebrity history information. For example, the server (110) may train the artificial intelligence model (242) based on first training data (601) including at least one celebrity image of a specific celebrity, and second training data (602) including advertisement images including the celebrity image. As a result, an artificial intelligence model (242) capable of generating an advertisement image using an image of the specific celebrity may be generated.

According to various embodiments, the artificial intelligence model (242) (e.g., the third artificial intelligence model) may be a model trained to generate product attribute information by using information of a product to be advertised as first training data (601), and product features and/or P feature values corresponding to the product features (e.g., a product feature vector (a P × 1 matrix)) as second training data (602).

According to various embodiments, the artificial intelligence model (242) (e.g., the fourth artificial intelligence model) may be trained by using information of a celebrity (e.g., a celebrity image) as first training data (601), and by being provided with celebrity features and/or feature values corresponding to the celebrity features as second training data (602). For example, the celebrity information used as the first training data (601) may include a celebrity image (and/or video), a celebrity name, age, height, weight, or a description of the celebrity, and the celebrity information used as the first training data (601) is not limited thereto. The celebrity information may be provided by the celebrity (e.g., the second external device (130) of the celebrity) or may be collected from an external server (e.g., an external cloud server including information on various celebrities).

For example, the second training data (602) may include a plurality of celebrity features and/or a plurality of C feature values corresponding to the plurality of celebrity features (e.g., a celebrity feature vector (a C × 1 matrix)). A "celebrity feature" may be a designated feature related to a person. For example, the plurality of celebrity features may include "cute," "lovely," "cool," "gorgeous," "luxury," and "healthy." In addition, the plurality of celebrity features may include features corresponding to product features, such as "sincerity (honest, cheerful, wholesome, friendly, sincere, original, real)", "excitement (darling, cool, imaginative, unique, trendy, young, contemporary)", "competence (successful, reliable, intelligent, secure, technical, leader)", "sophistication (charming, feminine, upper class, glamorous, smooth)", and "ruggedness (tough, masculine, outdoorsy, rugged)". According to various embodiments, the fourth artificial intelligence model may be trained to output a plurality of celebrity features corresponding to each of at least one celebrity image.

According to various embodiments, the server (110) may generate celebrity recommendation information based on a plurality of weight values for a specific product obtained through the third artificial intelligence model and a plurality of celebrity features obtained through the fourth artificial intelligence model. For example, the server (110) may output the celebrity recommendation information through the second artificial intelligence model based on the plurality of weight values for the specific product obtained through the third artificial intelligence model and the plurality of celebrity features obtained through the fourth artificial intelligence model.

According to various embodiments, the second artificial intelligence model may output celebrity recommendation information by providing functions performed in the third artificial intelligence model and the fourth artificial intelligence model in a similar manner.

According to various embodiments, the server (110) may obtain the celebrity recommendation information and transmit the celebrity recommendation information to an advertiser device (e.g., the first external device (120)). The server (110) may determine a celebrity image to be used for advertisement image generation based on a response of the advertiser device to the celebrity recommendation information.

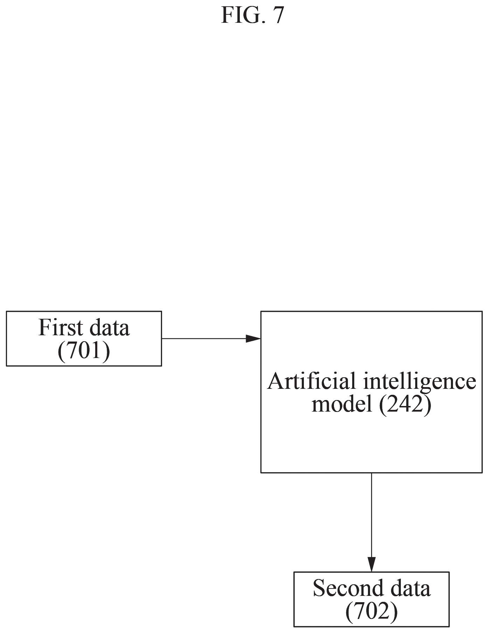

FIG. 7 is a diagram for explaining a trained artificial intelligence model according to various embodiments.

Referring to FIG. 7, the artificial intelligence model (242) may receive first data (701) as input and output second data (702). For example, the first data (701) may be data of the same type as the first training data (601) of FIG. 6, and the second data (702) may be data of the same type as the second training data (602) of FIG. 4.

According to various embodiments, the artificial intelligence model (242) may receive, as the first data (701), product feature information of a specific product to be advertised, a celebrity image of a specific celebrity with whom an advertisement contract is to be concluded, and/or popularity information of the specific celebrity, and may output an advertisement image as the second data (702).

According to various embodiments, the artificial intelligence model (242) is not limited to the above-described information and may receive various kinds of information as the first data (701) and output an advertisement image. For example, the artificial intelligence model (242) may receive product feature information and celebrity features as the first data (701) and output an advertisement image.

According to various embodiments, the artificial intelligence model (242) may receive product feature information for a specific product as the first data (701) and output celebrity recommendation information as the second data (702). According to various embodiments, the artificial intelligence model (242) is not limited to the above-described information and may receive various kinds of information as the first data (701) and output celebrity recommendation information. For example, the artificial intelligence model (242) may receive product feature information, celebrity features, and/or interaction information between a product and a celebrity (e.g., information indicating an effect of an advertisement combining the product and the celebrity) as the first data (701), and output celebrity recommendation information (e.g., numerical values evaluating celebrity combinations) as the second data (702).

According to various embodiments, the server (110) may transmit the celebrity recommendation information to an advertiser device (e.g., the first external device (120)) and may obtain a celebrity image to be used for an advertisement image based on a response of the advertiser device to the celebrity recommendation information. Accordingly, the server (110) may obtain celebrity recommendation information using the artificial intelligence model (242) (e.g., a first artificial intelligence model and a second artificial intelligence model), determine a celebrity image based on the obtained celebrity recommendation information, and obtain an advertisement image based on the determined celebrity image, product feature information, and popularity information of the celebrity.

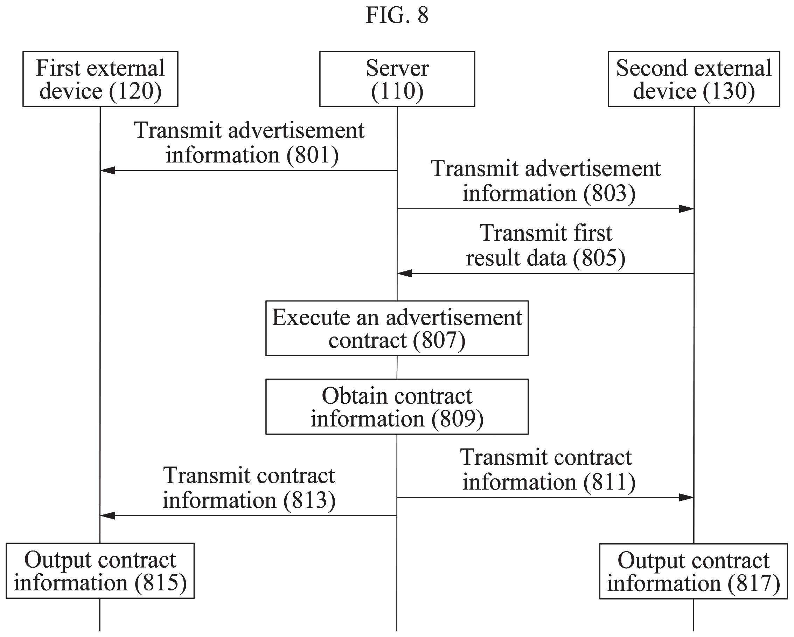

FIG. 8 is a flowchart for explaining operations in which a server intermediates an advertisement contract between a first external device and a second external device according to various embodiments.

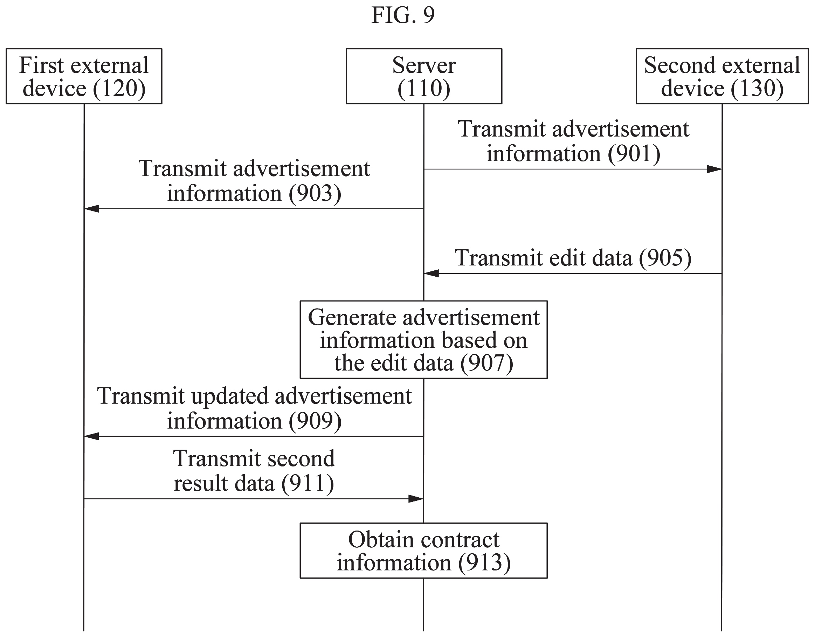

Referring to FIG. 8, operations of devices in a system providing an advertisement contract intermediation platform (e.g., the system (100) of FIG. 1) are illustrated. The operations may be organically performed, and at least some of the operations of FIG. 8 and the operations of FIG. 9 may be omitted. Hereinafter, operations 801 through 815 disclosed herein are not limited to specific entities and may be performed by devices in the system (e.g., the system (100) of FIG. 1).

According to various embodiments, in operation 801, the server (110) may transmit the advertisement information to the first external device (120). For example, the server (110) may transmit the generated advertisement information such that the first external device (120) outputs the advertisement information. Accordingly, a user (e.g., an advertiser) of the first external device (120) may check the generated advertisement information.

According to various embodiments, in operation 803, the server (110) may transmit advertisement information obtained by performing the operations described with reference to FIGS. 4 through 5 to the second external device (130). According to various embodiments, the server (110) may generate advertisement information including an advertisement image described with reference to FIGS. 4 through 5 and transmit the generated advertisement information to the second external device (130). For example, the server (110) may generate advertisement information including at least one of an advertisement image, a specific product to be advertised, and condition information related to an advertisement contract (e.g., contract period, contract cost, number of advertisement executions, advertisement platform), and transmit the advertisement information to the second external device (130).

According to various embodiments, the server (110) may transmit the generated advertisement information such that the second external device (130) outputs the advertisement information. Accordingly, a user (e.g., a celebrity) of the second external device (130) may check the generated advertisement information. Therefore, the user of the second external device (130) may reduce risks related to concluding an advertisement contract (e.g., image damage) by checking the advertisement image included in the advertisement information before concluding the advertisement contract.

According to various embodiments, in operation 805, the second external device (130) may generate first result data based on the advertisement information obtained from the server (110) and transmit the first result data to the server (110).

For example, the second external device (130) may generate first result data indicating approval or disapproval of an advertisement contract in response to the received advertisement image.

According to various embodiments, in operation 807, the server (110) may conclude an advertisement contract for a specific product between an advertiser who is a user of the first external device (120) and a celebrity who is a user of the second external device (130). For example, the server (110) may store information indicating that an advertisement contract for the specific product has been concluded based on the first result data. For example, if first result data indicating approval of an advertisement contract is obtained from the second external device (130), the server (110) may conclude the advertisement contract between the advertiser and the celebrity for the specific product.

According to various embodiments, in operation 809, the server (110) may obtain contract information. For example, if first result data indicating approval of an advertisement contract is obtained from the second external device (130), the server (110) may conclude the advertisement contract for the specific product between the advertiser and the celebrity and obtain contract information.

According to various embodiments, in operation 811, the server (110) may transmit the contract information to the second external device (130), and in operation 813, the server (110) may transmit the contract information to the first external device (120). According to various embodiments, the contract information may include various pieces of information related to the advertisement contract, such as information indicating conclusion of the advertisement contract, condition information of the advertisement contract, information on the product to be advertised, information on the celebrity to be advertised, and advertisement information.

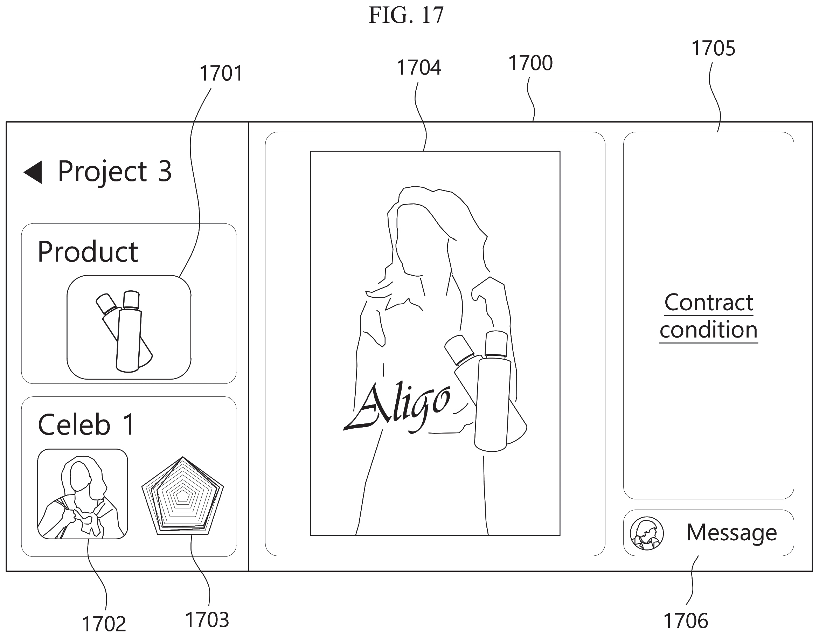

According to various embodiments, in operations 815 and 817, the first external device (120) and the second external device (130) may output the contract information, respectively. The contract information output through the first external device (120) and the second external device (130) will be described later with reference to FIG. 17.

FIG. 9 is a flowchart for explaining operations in which a server intermediates an advertisement contract based on edit data according to various embodiments.

Referring to FIG. 9, operations of devices in a system providing an advertisement contract intermediation platform (e.g., the system (100) of FIG. 1) are illustrated. The operations may be organically performed, and operations 901 through 907 disclosed herein are not limited to specific entities and may be performed by devices in the system (e.g., the system (100) of FIG. 1). In addition, descriptions of operations similar to those described with reference to FIGS. 1 through 8 may be omitted.

According to various embodiments, in operation 901, the server (110) may transmit advertisement information obtained by performing the operations described with reference to FIGS. 4 through 5 to the second external device (130). In addition, according to various embodiments, in operation 903, the server (110) may transmit the advertisement information to the first external device (120).

According to various embodiments, in operation 905, the second external device (130) may generate edit data based on the advertisement information obtained from the server (110) and transmit the edit data to the server (110). Alternatively, the second external device (130) may transmit first result data including the edit data to the server (110).

For example, the second external device (130) may output the advertisement information through a display and obtain a celebrity's input requesting modification of the advertisement information in response to the advertisement information. For example, the second external device (130) may obtain at least one user input including an input for editing a portion of the advertisement information, an input requesting modification of the portion, or an input for additional requests related to the advertisement contract. In one example, the second external device (130) may generate edit data based on the user input and transmit the edit data to the server (110). Alternatively, the second external device (130) may generate first result data including information indicating disapproval of the advertisement contract and/or the edit data and transmit the first result data to the server (110).

According to various embodiments, in operation 907, the server (110) may update (or edit) the advertisement information based on the edit data. For example, the server (110) may update the advertisement information by reflecting edit data for the advertisement information obtained from the second external device (130). Alternatively, the server (110) may determine whether edit data requesting modification of the advertisement information is included in the first result data obtained from the second external device (130), and may update the advertisement information based on the edit data if the edit data is included.

According to various embodiments, the server (110) may obtain contract information indicating conclusion of an advertisement contract based on the updated advertisement information. For example, the server (110) may obtain contract information by performing operations similar to operation 809 described with reference to FIG. 8. The contract information may include the advertisement information edited through the second external device (130).

According to various embodiments, in operation 909, the server (110) may transmit the updated advertisement information to the first external device (120). For example, the server (110) may transmit the updated advertisement information to the first external device (120), which is an advertiser's device, such that the advertiser can check modification requests obtained from the celebrity who is a user of the second external device (130).

According to various embodiments, in operation 911, the first external device (120) may generate second result data based on the advertisement information obtained from the server (110) and transmit the second result data to the server (110).

For example, the first external device (120) may output the updated advertisement information through a display and obtain an advertiser's input indicating approval or disapproval of the advertisement contract in response to the updated advertisement information. The first external device (120) may generate second result data indicating approval or disapproval of the advertisement contract and transmit the second result data to the server (110).

According to various embodiments, in operation 911, the server (110) may obtain contract information. For example, if second result data indicating approval of the advertisement contract based on the updated advertisement information is obtained from the first external device (120), the server (110) may conclude the advertisement contract between the advertiser and the celebrity for a specific product and obtain contract information.

According to various embodiments, the server (110) may transmit the updated contract information to the second external device (130) and the first external device (120). According to various embodiments, the updated contract information may include various pieces of information related to the advertisement contract, such as information indicating conclusion of the advertisement contract, condition information of the advertisement contract, information on the product to be advertised, information on the celebrity to be advertised, and advertisement information.

According to various embodiments, the first external device (120) and the second external device (130) may respectively output the updated contract information. The contract information output through the first external device (120) and the second external device (130) will be described later with reference to FIG. 17.

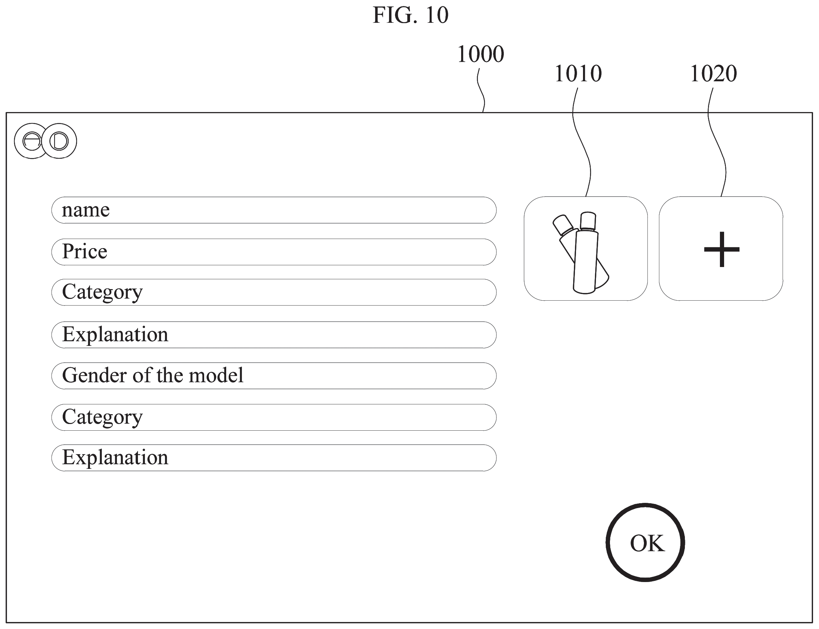

FIG. 10 illustrates an example of a screen for receiving product feature information according to various embodiments.

According to various embodiments, the first external device (120) may display a screen (1000) for receiving at least one content of a specific product that an advertiser intends to advertise. For example, the advertiser may input information on the product to be advertised through the screen (1000) displayed on the first external device (120). For example, the screen (1000) may include an interface for receiving product information (e.g., a name related to the product, price, category, description, image) and information on a preferred advertising model (e.g., gender of the advertising model, category, description). For example, the screen (1000) may include an interface (e.g., 1010, 1020) for receiving an image of the product and displaying the received image. For example, the screen (1000) may further include an interface for specifying a country in which the advertiser intends to advertise. According to various embodiments, the first external device (120) may provide at least one content of the specific product (e.g., a name related to the product, price, category, description, image) received through the screen (1000) to the server (110) to obtain product feature information of the specific product that the advertiser intends to advertise, or may obtain product attribute information (e.g., feature values corresponding to a plurality of product features) of the specific product based on at least one content of the specific product (e.g., a name related to the product, price, category, description, image) received through the screen (1000).

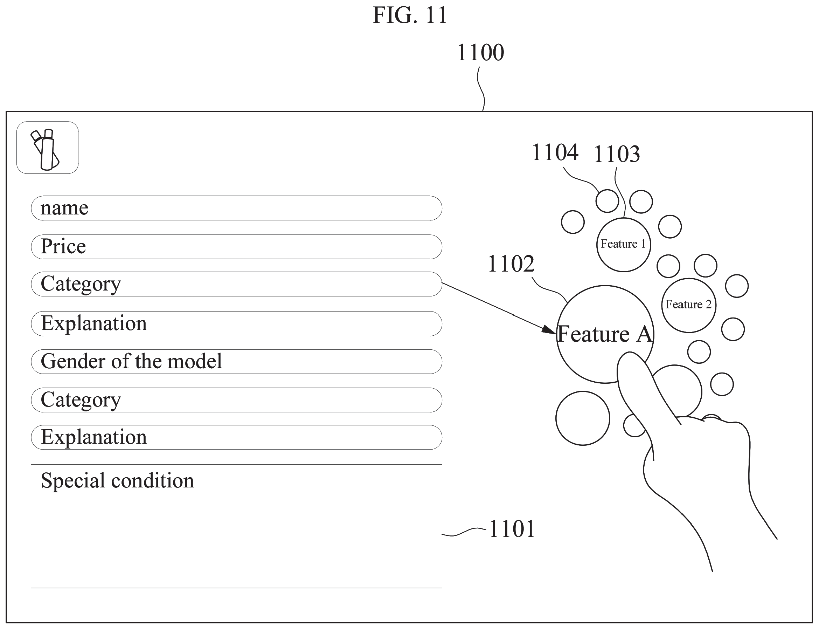

FIG. 11 is a diagram illustrating an example of a screen for receiving product feature information according to various embodiments.

According to various embodiments, the first external device 120 may display a screen 1100 for receiving at least one piece of content of a specific product that an advertiser intends to advertise. For example, the advertiser may input information about the product to be advertised through the screen 1100 displayed on the first external device 120. For example, the screen 1100 may include interfaces 1102, 1103, and 1104 for receiving product information (e.g., a name related to the product, a price, a category, a description, and an image).

According to various embodiments, the first external device 120 may display interfaces 1102, 1103, and 1104 for displaying examples of product feature information of the product to be advertised and allowing the advertiser to select the product feature information. For example, the first external device 120 may display an interface 1102 for a plurality of first-rank features having relevance equal to or greater than a predetermined level, based on at least a part of previously input product information (e.g., a name related to the product, a price, a category, a description, and an image). The first external device 120 may, in response to recognizing a user input (e.g., a keyboard input, a mouse input, a touch input, a hovering input, or a voice input) selecting one of the plurality of first-rank features, store the selected feature (e.g., Feature A) and display an interface 1103 for a plurality of second-rank features having relevance equal to or greater than a predetermined level thereto. In addition, the first external device 120 may, in response to recognizing a user input selecting one of the plurality of second-rank features, store the selected feature (e.g., Feature 1) and display an interface 1104 for a plurality of third-rank features having relevance equal to or greater than a predetermined level thereto. The first external device 120 may perform similar operations to repeatedly input product feature information of the specific product more conveniently. According to various embodiments, the first external device 120 may display the interfaces corresponding to the plurality of features with different sizes according to the ranks of the plurality of features. For example, an interface size for the plurality of first-rank features may be larger than an interface size for the plurality of third-rank features.

According to various embodiments, the screen 1100 may include a condition input interface 1101 for receiving various conditions for the specific product when entering into an advertisement contract for the specific product. According to various embodiments, the first external device 120 may obtain condition information related to a contract of the specific product (e.g., a minimum sales quantity, a product type condition, and an advertisement contract condition) input through the condition input interface 1101 of the screen 1100.

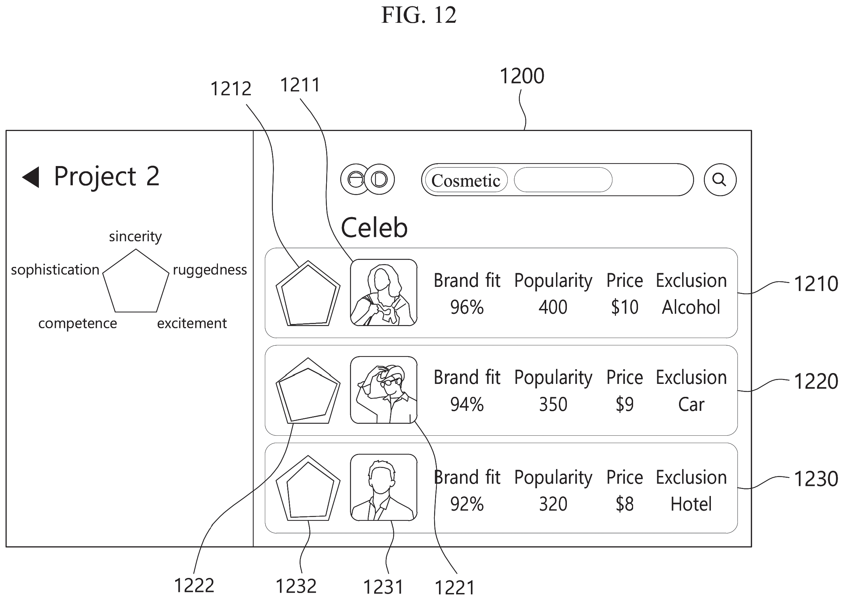

FIG. 12 is a diagram illustrating an example of a screen for recommending celebrities according to various embodiments.

According to various embodiments, the first external device 120 may display a screen 1200 for recommending at least one celebrity image. For example, through the methods described with reference to the preceding drawings, the first external device 120 may display a screen for recommending at least one celebrity image through a process of obtaining product feature information of a specific product when at least one piece of content of the specific product is input.

According to various embodiments, information 1210, 1220, and 1230 about the displayed celebrities may include a celebrity image, brand fit, popularity, an advertisement contract unit price (Price), and information about excluded products (Exclusion).

According to various embodiments, the brand fit may be calculated based on weight values related to the specific product described in the preceding drawings and/or celebrity attribute information of each celebrity image.

According to various embodiments, the popularity may be an indicator representing real-time or future popularity of a celebrity. For example, the popularity may be identified in real time based on Internet search volume data. For example, the popularity may be calculated or predicted based on a future time point according to a celebrity's future work schedule. For example, the popularity of a celebrity may be identified differently according to a country to be advertised (e.g., popularity by country).

According to various embodiments, the advertisement contract unit price (Price) may represent a CPC (cost per click) of the celebrity. The advertisement contract unit price may be preset for the corresponding celebrity, or may be determined based on advertising performance of advertisements previously executed by the celebrity and/or real-time popularity. According to one embodiment, when the advertiser inputs an advertisement execution period and/or an advertisement budget, a celebrity having an advertisement contract unit price that does not fall within a range calculated based on the advertisement execution period and/or the advertisement budget (e.g., exceeds the range) may be excluded from the recommendation result.

According to various embodiments, the excluded product (Exclusion) may represent a category of products excluded by the celebrity. For example, when a specific celebrity registers "Alcohol" as an excluded product, and when a category of the specific product is "Alcohol," the specific celebrity may be excluded from the recommendation result.

According to various embodiments, in one area (e.g., a left area) of the screen 1200, criteria used to search for at least one celebrity image may be displayed. Information related to celebrity features corresponding to a relatively high designated number of weight values, as described with reference to FIG. 8, may be provided. For example, the celebrity features may be provided in a text form and/or a pentagon form. As another example, the celebrity features may be provided in a text box form.

According to various embodiments, the information about the displayed celebrities may include an image 1211, 1221, or 1231 having the highest brand fit among celebrity images of the corresponding celebrity. According to one embodiment, a plurality of images having high brand fit among the celebrity images of the corresponding celebrity may be displayed.

According to various embodiments, the information about the displayed celebrities may include visual objects 1212, 1222, and 1232 indicating celebrity feature values of each celebrity (or each celebrity image). According to various embodiments, each visual object may indicate celebrity feature values of celebrity features corresponding to a relatively high designated number of weight values. According to one embodiment, as illustrated, celebrity features such as "gorgeous" may not be displayed in the visual objects 1212, 1222, and 1232, but celebrity features corresponding to the celebrity feature values may be displayed together with the celebrity feature values.

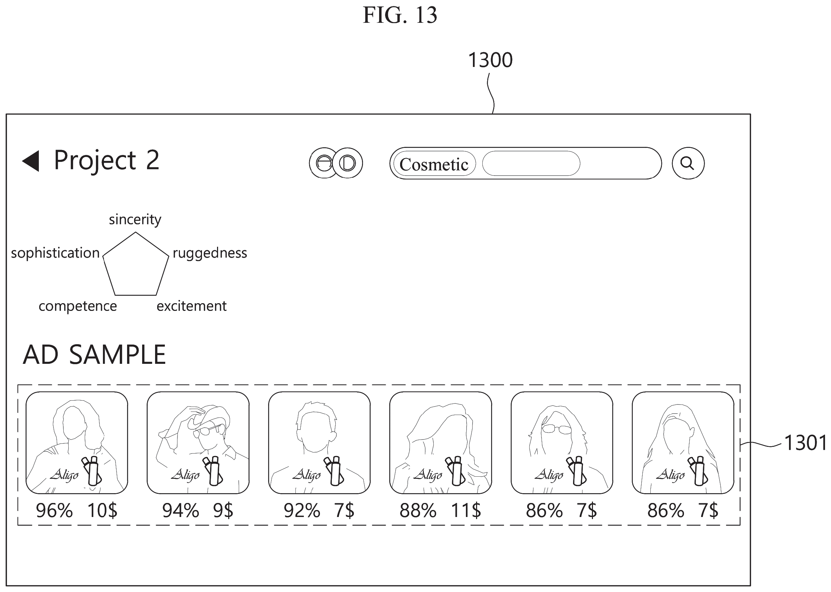

FIG. 13 is a diagram illustrating an example of a screen for determining a celebrity image using a plurality of sample advertisement images according to various embodiments.

According to various embodiments, the first external device 120 may display a screen 1300 for recommending a celebrity image based on a plurality of sample advertisement images (e.g., the plurality of first sample advertisement images described with reference to FIG. 5) for at least one celebrity image. The screen 1300 may include a list 1301 of the plurality of sample advertisement images.

According to various embodiments, the server 110 may generate a plurality of first sample advertisement images based on at least one celebrity image, product feature information, and popularity information corresponding to each of the at least one celebrity image, and may provide the plurality of first sample advertisement images to the first external device 120.

According to various embodiments, the first external device 120 may output the screen 1300 including the list 1301 of the plurality of sample advertisement images, and may obtain a user input (e.g., an advertiser input) for selecting a celebrity image to be used for advertisement execution from among the plurality of advertisement images included in the list 1301 of the plurality of sample advertisement images. The first external device 120 may provide information about the user input to the server 110. Based on the user input, the celebrity image to be used in the advertisement image may be determined.

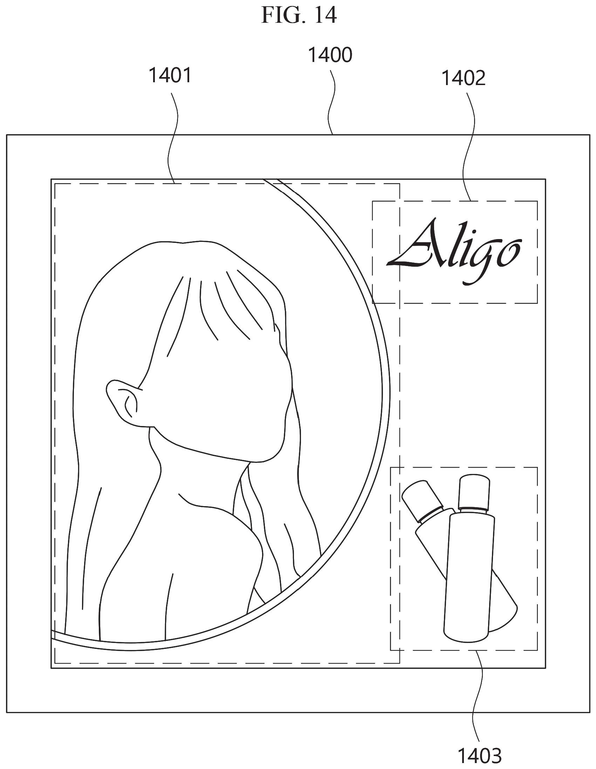

FIG. 14 is a diagram illustrating an example of a celebrity advertisement image according to various embodiments.

Referring to FIG. 14, an advertisement image 1400 output through the electronic device 200 (e.g., the first external device 120 and/or the second external device 130) is illustrated. The advertisement image 1400 may include a celebrity image 1401 described with reference to FIGS. 4 and 5, product feature information 1403 of a specific product to be advertised, and popularity information 1402 of the celebrity described with reference to FIGS. 4 and 5. For example, the advertisement image may include an image in which the product feature information 1403 and the popularity information 1402 are overlaid on at least a portion of the celebrity image 1401.

According to various embodiments, various advertisement images may be generated without being limited to the advertisement image 1400 illustrated in FIG. 14. For example, the server 110 may obtain an advertisement image including a selected frame applied to the celebrity image 1401, the product feature information 1403, and the celebrity popularity information 1402. According to various embodiments, the frame usable in the advertisement image 1400 may be determined based on at least one of a celebrity, a type of a specific product, a celebrity image, celebrity popularity information, a user input of the first external device 120, or a user input of the second external device 130.

According to various embodiments, by outputting the advertisement image 1400, an advertiser who is a user of the second external device 130 may preview the advertisement image and approve the advertisement contract, thereby enabling the advertisement contract to be concluded rapidly and safely.

FIG. 15 is a diagram illustrating an example of a screen displaying a plurality of sample advertisement images for a specific celebrity according to various embodiments.

Referring to FIG. 15, the first external device 120 may display a screen 1500 including a plurality of sample advertisement images 1502 (e.g., the plurality of second sample advertisement images described with reference to FIG. 5) as the product feature information, the celebrity image, and the popularity information of the celebrity are input.

According to various embodiments, the server 110 may obtain a plurality of second sample advertisement images as the product feature information, the celebrity image, and the popularity information of the celebrity are input. According to various embodiments, the server 110 may transmit the plurality of second sample advertisement images to the first external device 120.

According to various embodiments, the screen 1500 may include not only the plurality of second sample advertisement images 1502 but also a sample advertisement image 1501. According to various embodiments, the sample advertisement image 1501 may be obtained using the specialized artificial intelligence model 242 described with reference to FIGS. 5 and 7, and the size or arrangement of the plurality of sample advertisement images 1502 and the sample advertisement image 1501 may be different from each other.

According to various embodiments, the first external device 120 may select an advertisement image to be used as an advertisement image from among the plurality of second sample advertisement images 1502. According to various embodiments, the plurality of second sample advertisement images may include images in which product information and popularity information are overlaid at different positions on at least a portion of the celebrity image.

According to various embodiments, the screen 1500 may include an interface 1503 configured to obtain additional information to be used in the advertisement image. For example, when additional information to be used in the advertisement image is obtained through the first external device 120, the server 110 may update the advertisement image in consideration of the additional information and may transmit the updated advertisement image to the first external device 120. For example, the first external device 120 may obtain the additional information based on a user input to the interface 1503. According to various embodiments, a first interface 1503 for obtaining the additional information may include an interface for obtaining a product name, a main copy, and a sub copy.

According to various embodiments, the first external device 120 may output the plurality of sample advertisement images and may obtain a user input (e.g., an advertiser input) for selecting an advertisement image to be used for advertisement execution from among the plurality of second sample advertisement images 1502. The first external device 120 may transmit information about the user input to the server 110.

According to various embodiments, the server 110 may obtain the advertisement image to be used for advertisement execution based on a response (e.g., a user response of the first external device 120) to the plurality of second sample advertisement images.

According to various embodiments, the screen 1500 may include a second interface 1504 and a third interface 1505. The second interface 1504 may be an object for obtaining an input indicating whether to generate an advertisement image to which the additional information is added when a user input to the first interface 1503 is obtained. For example, with respect to the screen 1500 of FIG. 15, when a user of the first external device 120 inputs additional information into the first interface 1503 and a user input to the second interface 1504 is obtained within a designated time, the screen 1500 may include an advertisement image 1501 reflecting the additional information described in the first interface 1503.

According to various embodiments, the fourth interface 1505 may be an object for obtaining an input indicating whether an advertiser is to execute a contract based on a selected advertisement image or an advertisement image reflecting the additional information. For example, when the first external device 120 obtains a user input for at least one advertisement image among the plurality of sample advertisement images 1502 and the sample advertisement image 1501, and a user input to the fourth interface 1505 is obtained within a designated time, the advertisement image to be used for advertisement execution may be obtained based on the user input.

The advertisement image may include at least one of a sample advertisement image selected based on the user input or an advertisement image obtained by upgrading the sample advertisement image.

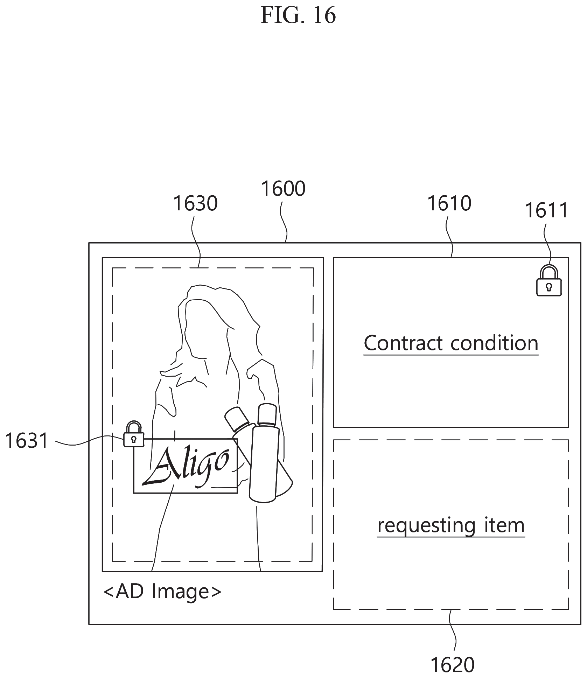

FIG. 16 is a diagram illustrating an example of a screen for obtaining edit data from advertisement information according to various embodiments.

According to various embodiments, an electronic device 200 (e.g., the first external device 120 and/or the second external device 130) may output the advertisement information described with reference to FIGS. 4 to 5 and may display a screen 1600 for obtaining edit data for the advertisement information.

For example, the second external device 130 may display a screen 1600 including the advertisement information and may obtain an input from a celebrity requesting a modification of the advertisement information. For example, the screen 1600 may include an interface for receiving a request for modification of an advertisement image, a request for modification of contract conditions, and an input for additional requests. For example, the screen 1600 may include an interface 1630 for displaying the advertisement image and receiving a request for modification of the advertisement image, an interface 1610 for displaying contract conditions and receiving a request for modification of the contract conditions, and/or an interface 1620 for receiving an input for additional requests.

According to various embodiments, the second external device 130 may obtain user inputs for the advertisement image, advertisement conditions, and additional requests through the interfaces 1610, 1620, and 1630. In one example, the second external device 130 may generate edit data based on the user inputs and may transmit the edit data to the server 110.

According to various embodiments, the screen 1600 may further include a first indicator 1611 and/or a second indicator 1631, which are objects indicating portions of the advertisement information for which modification requests are restricted.

According to various embodiments, the first indicator 1631 may be an object indicating that modification of a visual object representing popularity information in the advertisement image is restricted. For example, in the screen 1600 of FIG. 16, it is illustratively shown that a user of the second external device 130 cannot request a modification of the popularity information ("Aligo").

According to various embodiments, the second indicator 1611 may be an object indicating that modification of contract conditions for the advertisement is restricted. For example, in the screen 1600 of FIG. 16, it is illustratively shown that a user of the second external device 130 cannot request a modification of the contract conditions ("Contract condition").

According to various embodiments, a modification request input of the second external device 130 related to the first indicator 1631 and the second indicator 1611 may be restricted.

FIG. 17 is a diagram illustrating an example of a result screen of an advertisement mediation platform according to various embodiments.

According to various embodiments, an electronic device 200 (e.g., the first external device 120 and/or the second external device 130) may display a result screen 1700 of the advertisement mediation platform. For example, through the screen 1700, an advertisement image 1704 obtained based on product feature information 1701 for a specific product, a celebrity image 1702, and celebrity popularity information (e.g., Aligo) may be displayed.

According to various embodiments, the screen 1700 may further include an object 1703 representing celebrity features (e.g., a radial graph), contract conditions 1705, and a conversation interface 1706.

According to various embodiments, when a user input to the conversation interface 1706 is obtained, a conversation function between an advertiser and a celebrity may be activated.

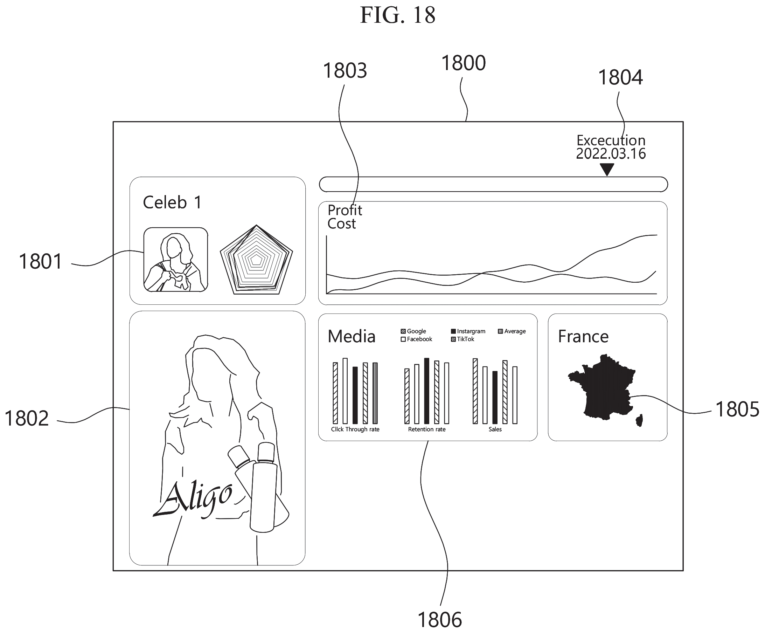

FIG. 18 is a diagram illustrating an example of advertisement execution results according to various embodiments.

According to various embodiments, an electronic device 200 (e.g., the first external device 120 or the second external device 130) may display a screen 1800 indicating advertisement execution results (e.g., advertisement performance). For example, the screen 1800 may include a first image 1801 (e.g., an image of a celebrity used in the advertisement or a representative image of the celebrity), a second image 1802 (e.g., an advertisement image that has been executed), a profit/cost graph 1803, an object 1804 indicating an advertisement execution date, an object 1805 indicating a target country for the advertisement, and an object 1806 indicating advertisement performance.

According to various embodiments, the screen 1800 may include only one of the first image 1801 or the second image 1802, or may include both the first image 1801 and the second image 1802. The configuration of the screen 1800 may vary depending on whether the electronic device 200 is the first external device 120 or the second external device 130. For example, depending on whether the screen is provided to an advertiser through the first external device 120 or provided to a celebrity through the second external device 130, it may be determined which of the first image 1801 or the second image 1802 is included.

According to various embodiments, the object 1806 indicating advertisement performance may include objects indicating, for each medium (e.g., SNS), a "click through rate," a "retention rate," and/or "sales." The electronic device 200 may identify advertisement performance of an advertisement image and may display the object 1806 indicating the advertisement performance on the screen 1800.

According to various embodiments, the server 110 may update reference values for determining celebrity features of a celebrity (or a celebrity image) used in an advertisement image, product feature information of a target product of the advertisement image, or weight values for a specific product (or product attribute information), based on advertisement performance corresponding to the advertisement image. For example, the reference values may be commonly used regardless of a specific product (or product attribute information), and advertisement performance of each advertised product based on an advertisement image generated by recommending a celebrity image for each advertised product based on the reference values may be identified. The server 110 may update (or adjust) the reference values to values that maximize the advertisement performance based on the advertisement performance.

The examples of the screens described with reference to FIGS. 10 to 18 are not limited to the illustrated drawings. The first external device 120 and/or the second external device 130 may display similar configurations in various manners without being limited to the examples of the screens illustrated with reference to FIGS. 10 to 18.

It may be understood that the embodiments of FIGS. 1 to 18 may be organically applied to each other within an applicable scope.

As described above, a server providing an advertisement contract intermediation platform includes a communication circuit configured to transmit and receive signals with a first external device and a second external device, a storage medium, and at least one processor, and the at least one processor is configured to obtain product feature information based on at least one content of a specific product obtained from the first external device, obtain a celebrity image of a specific celebrity among at least one celebrity image obtained from the second external device, obtain popularity information of the specific celebrity, obtain an advertisement image based on the celebrity image, the product feature information, and the popularity information, wherein the advertisement image is an image in which the product feature information and the popularity information are overlapped on at least a partial area of the celebrity image, obtain first result data indicating whether an advertisement contract is approved in response to transmitting advertisement information including the advertisement image to the second external device, and transmit contract information indicating establishment of the advertisement contract obtained based on the first result data so that at least one of the first external device and the second external device outputs the contract information.

According to various embodiments, the at least one content includes an image of the specific product, and the product feature information includes product attribute information generated based on a plurality of weight values related to a plurality of product features of the specific product.

According to various embodiments, the at least one processor is configured to obtain a plurality of celebrity features corresponding to each of the at least one celebrity image, obtain celebrity image recommendation information based on the plurality of celebrity features and the plurality of weight values, transmit the celebrity image recommendation information to the first external device, and obtain the celebrity image based on a response of the first external device to the celebrity image recommendation information.

According to various embodiments, the at least one processor is configured to obtain a plurality of first sample advertisement images based on the at least one celebrity image stored in the storage medium, the product feature information, and popularity information corresponding to each of the at least one celebrity image, and transmit the plurality of first sample advertisement images to the first external device so that a user of the first external device selects a celebrity image for generating the advertisement image based on the plurality of first sample advertisement images.

According to various embodiments, the at least one processor is configured to obtain the celebrity image based on a response of the first external device to the plurality of first sample advertisement images.

According to various embodiments, the at least one processor is configured to obtain a plurality of second sample advertisement images based on the celebrity image, the product feature information, and the popularity information, wherein the plurality of second sample advertisement images are images in which the product feature information and the popularity information are overlapped at different positions on at least a partial area of the celebrity image, and transmit the plurality of second sample advertisement images to the first external device so that one of the plurality of second sample advertisement images is selected.

According to various embodiments, the at least one processor is configured to obtain the advertisement image based on a response of the first external device to the plurality of second sample advertisement images.

According to various embodiments, the at least one processor is configured to obtain the advertisement image by inputting at least one of the celebrity image, the product feature information, and the popularity information to an artificial intelligence model trained to generate an advertisement image.

According to various embodiments, the at least one processor is configured to store advertiser history information related to advertisement image generation associated with the first external device in the storage medium, and store, in the storage medium, the artificial intelligence model trained to generate the advertisement image based on the advertiser history information.

According to various embodiments, the at least one processor is configured to store product advertisement history information related to advertisement image generation for the specific product in the storage medium, and store, in the storage medium, the artificial intelligence model trained to generate the advertisement image based on the product advertisement history information.

According to various embodiments, the at least one processor is configured to store celebrity history information related to advertisement image generation for the specific celebrity in the storage medium, and store, in the storage medium, the artificial intelligence model trained to generate the advertisement image based on the celebrity history information.

According to various embodiments, the at least one processor is configured to update the advertisement information based on edit data when the first result data includes edit data requesting modification of the advertisement information, and transmit the updated advertisement information to the first external device.

According to various embodiments, the at least one processor is configured to obtain second result data indicating whether the advertisement contract is approved in response to the updated advertisement information obtained from the first external device, and obtain the contract information indicating establishment of the advertisement contract based on the second result data.

As described above, a method of operating a server providing an advertisement contract intermediation platform includes obtaining product feature information based on at least one content of a specific product obtained from a first external device, obtaining a celebrity image of a specific celebrity among at least one celebrity image obtained from a second external device, obtaining popularity information of the specific celebrity, obtaining an advertisement image based on the celebrity image, the product feature information, and the popularity information, wherein the advertisement image is an image in which the product feature information and the popularity information are overlapped on at least a partial area of the celebrity image, obtaining first result data indicating whether an advertisement contract is approved in response to transmitting advertisement information including the advertisement image to the second external device, and transmitting contract information indicating establishment of the advertisement contract obtained based on the first result data so that at least one of the first external device and the second external device outputs the contract information.

As described above, a system providing an advertisement contract intermediation platform includes a server, a first external device, and a second external device, wherein the server is configured to obtain product feature information based on at least one content of a specific product obtained from the first external device, obtain a celebrity image and popularity information of a specific celebrity based on at least one celebrity image obtained from the second external device, obtain an advertisement image based on the celebrity image, the product feature information, and the popularity information, transmit advertisement information including the advertisement image to the second external device, wherein the second external device is configured to transmit first result data indicating whether an advertisement contract is approved to the server in response to the advertisement information, and the server is configured to obtain contract information indicating establishment of the advertisement contract based on the first result data.

According to various embodiments, the advertisement image is an image in which the product feature information and the popularity information are overlapped on at least a partial area of the celebrity image, the second external device is configured to output a first screen including the advertisement information, and obtain an input from a user of the second external device indicating whether the advertisement contract is approved in response to the first screen.

According to various embodiments, the second external device is configured to obtain an input requesting modification of the advertisement information from the user of the second external device in response to the first screen, obtain first result data including edit data in response to the input requesting modification, and transmit the first result data to the server.

According to various embodiments, the first screen includes a visual indication indicating a modification-restricted area of the advertisement information that the user of the second external device is not allowed to modify, and an input requesting modification of the modification-restricted area by the user of the second external device may be restricted.

According to various embodiments, the server is configured to update the advertisement information based on the edit data when the first result data includes edit data requesting modification of the advertisement information, and transmit the updated advertisement information to the first external device.

According to various embodiments, the server is configured to obtain second result data indicating whether the advertisement contract is approved in response to the updated advertisement information obtained from the first external device, and obtain the contract information indicating establishment of the advertisement contract based on the second result data.

In the present disclosure, phrases such as "A or B," "at least one of A and B," "at least one of A or B," "A, B, or C," "at least one of A, B, and C," and "at least one of A, B, or C" each include any one of the listed items associated with the corresponding phrase, or all possible combinations thereof.

Terms such as "first," "second," "primary," or "secondary" are used merely to distinguish one component from another component, and do not limit the components in any other aspect (e.g., importance or order).

In various embodiments of the present disclosure, the term "module" may include a unit implemented in hardware, software, or firmware. For example, the term may be interchangeably used with terms such as logic, logic block, component, or circuit. A module may be an integrated component, or a minimum unit or a part thereof that performs one or more functions.

The various embodiments of the present disclosure may be implemented as software (e.g., a program) including one or more instructions stored in a storage medium 240 readable by a device (e.g., the electronic device 200). The storage medium 240 may be expressed as a storage medium.

According to one embodiment, a method according to the various embodiments disclosed herein may be provided by being included in a computer program product. The computer program product may be traded as a product between a seller and a purchaser. The computer program product may be distributed in the form of a device-readable storage medium (e.g., a CD-ROM (compact disc read only memory)), or may be distributed online (e.g., by download or upload) through an application store or directly between two user devices.

According to various embodiments, each of the components described above (e.g., modules or programs) may include a single entity or a plurality of entities, and some of the plurality of entities may be disposed separately in other components. According to various embodiments, one or more of the above-described components or operations may be omitted, or one or more other components or operations may be added. Additionally or alternatively, a plurality of components (e.g., modules or programs) may be integrated into a single component. In such a case, the integrated component may perform one or more functions of each of the plurality of components in the same or similar manner as those performed by the respective components before integration.

According to various embodiments, operations performed by modules, programs, or other components may be executed sequentially, in parallel, repetitively, or heuristically, or one or more of the operations may be executed in a different order, omitted, or one or more other operations may be added.

## Claims

1. A server for providing an advertisement contract intermediation platform, comprising:
a communication circuit configured to transmit and receive signals with a first external device and a second external device;
a storage medium; and
at least one processor,
wherein the at least one processor is configured to:
obtain product feature information based on at least one content of a specific product obtained from the first external device;
obtain a celebrity image of a specific celebrity from among at least one celebrity image obtained from the second external device;
obtain popularity information of the specific celebrity;
obtain an advertisement image based on the celebrity image, the product feature information, and the popularity information,
wherein the advertisement image includes the product feature information and the popularity information overlapped on at least a partial region of the celebrity image;
obtain first result data indicating approval or disapproval of an advertisement contract, in response to transmitting advertisement information including the advertisement image to the second external device; and
transmit contract information indicating execution of the advertisement contract, obtained based on the first result data, such that at least one of the first external device and the second external device outputs the contract information.

2. The server of claim 1,
wherein the at least one content includes an image of the specific product, and
wherein the product feature information includes product attribute information generated based on a plurality of weight values related to a plurality of product features of the specific product.

3. The server of claim 2,
wherein the at least one processor is configured to:
obtain a plurality of celebrity features corresponding to each of the at least one celebrity image;
obtain celebrity image recommendation information based on the plurality of celebrity features and the plurality of weight values;
transmit the celebrity image recommendation information to the first external device; and
obtain the celebrity image based on a response of the first external device to the celebrity image recommendation information.

4. The server of claim 1,
wherein the at least one processor is configured to:
obtain a plurality of first sample advertisement images based on the at least one celebrity image stored in the storage medium, the product feature information, and popularity information corresponding to each of the at least one celebrity image; and
transmit the plurality of first sample advertisement images to the first external device, such that a user of the first external device selects a celebrity image for generating the advertisement image based on the plurality of first sample advertisement images.

5. The server of claim 4,
wherein the at least one processor is configured to:
obtain the celebrity image based on a response of the first external device to the plurality of first sample advertisement images.

6. The server of claim 1,
wherein the at least one processor is configured to:
obtain a plurality of second sample advertisement images based on the celebrity image, the product feature information, and the popularity information, wherein the plurality of second sample advertisement images are images in which the product feature information and the popularity information are overlapped at different positions on at least a partial region of the celebrity image; and
transmit the plurality of second sample advertisement images to the first external device, such that one of the plurality of second sample advertisement images is selected.

7. The server of claim 6,
wherein the at least one processor is configured to:
obtain the advertisement image based on a response of the first external device to the plurality of second sample advertisement images.

8. The server of claim 1,
wherein the at least one processor is configured to:
obtain the advertisement image by inputting at least one of the celebrity image, the product feature information, and the popularity information to an artificial intelligence model trained to generate an advertisement image.

9. The server of claim 8,
wherein the at least one processor is configured to:
store advertiser history information related to advertisement image generation associated with the first external device in the storage medium; and
store, in the storage medium, the artificial intelligence model trained to generate the advertisement image based on the advertiser history information.

10. The server of claim 8,
wherein the at least one processor is configured to:
store product advertisement history information related to advertisement image generation associated with the specific product in the storage medium; and
store, in the storage medium, the artificial intelligence model trained to generate the advertisement image based on the product advertisement history information.

11. The server of claim 8,
wherein the at least one processor is configured to:
store celebrity history information related to advertisement image generation of the specific celebrity in the storage medium; and
store, in the storage medium, the artificial intelligence model trained to generate the advertisement image based on the celebrity history information.

12. The server of claim 1,
wherein the at least one processor is configured to:
update the advertisement information based on edit data, if the first result data includes edit data requesting a modification of the advertisement information; and
transmit the updated advertisement information to the first external device.

13. The server of claim 12,
wherein the at least one processor is configured to:
obtain second result data indicating approval or disapproval of an advertisement contract from the first external device in response to the updated advertisement information; and
obtain the contract information indicating execution of the advertisement contract based on the second result data.

14. A method of operating a server for providing an advertisement contract intermediation platform, comprising:
obtaining product feature information based on at least one content of a specific product obtained from a first external device;
obtaining a celebrity image of a specific celebrity from among at least one celebrity image obtained from a second external device;
obtaining popularity information of the specific celebrity;
obtaining an advertisement image based on the celebrity image, the product feature information, and the popularity information,
wherein the advertisement image is an image in which the product feature information and the popularity information are overlapped on at least a partial region of the celebrity image;
obtaining first result data indicating approval or disapproval of an advertisement contract in response to transmitting advertisement information including the advertisement image to the second external device; and
transmitting contract information indicating execution of the advertisement contract, obtained based on the first result data, such that at least one of the first external device and the second external device outputs the contract information.

15. A system for providing an advertisement contract intermediation platform, comprising:
a server;
a first external device; and
a second external device,
wherein the server is configured to:
obtain product feature information based on at least one content of a specific product obtained from the first external device;
obtain a celebrity image of a specific celebrity and popularity information based on at least one celebrity image obtained from the second external device;
obtain an advertisement image based on the celebrity image, the product feature information, and the popularity information; and
transmit advertisement information including the advertisement image to the second external device,
wherein the second external device is configured to transmit first result data indicating approval or disapproval of an advertisement contract to the server in response to the advertisement information, and
wherein the server is further configured to obtain contract information indicating execution of the advertisement contract based on the first result data.
